(19) Europäisches Patentamt
European Patent Office
Office européen des brevets

(11) EP 1 066 330 B1

(12) EUROPÄISCHE PATENTSCHRIFT

(45) Veröffentlichungstag und Bekanntmachung des Hinweises auf die Patenterteilung:
**06.02.2002 Patentblatt 2002/06**

(21) Anmeldenummer: **99915631.8**

(22) Anmeldetag: **17.03.1999**

(51) Int Cl.[7]: **C08F 4/642**, C08F 10/00

(86) Internationale Anmeldenummer:
**PCT/EP99/01733**

(87) Internationale Veröffentlichungsnummer:
**WO 99/50312 (07.10.1999 Gazette 1999/40)**

# (54) KATALYSATORSYSTEM, VERFAHREN ZU SEINER HERSTELLUNG UND SEINE VERWENDUNG ZUR POLYMERISATION VON OLEFINEN

CATALYST SYSTEM, METHOD FOR THE PRODUCTION THEREOF, AND THE UTILIZATION THEREOF FOR THE POLYMERIZATION OF OLEFINS

SYSTEME CATALYSEUR, SON PROCEDE DE PRODUCTION ET SON UTILISATION POUR LA POLYMERISATION D'OLEFINES

(84) Benannte Vertragsstaaten:
**DE ES FR GB IT NL**

(30) Priorität: **27.03.1998 DE 19813657**

(43) Veröffentlichungstag der Anmeldung:
**10.01.2001 Patentblatt 2001/02**

(73) Patentinhaber: **Basell Polyolefine GmbH
67056 Ludwigshafen (DE)**

(72) Erfinder:
- **GÖRES, Markus
D-65760 Eschborn (DE)**
- **BOHNEN, Hans
D-47441 Moers (DE)**

(56) Entgegenhaltungen:
**EP-A- 0 563 917**
**EP-A- 0 576 970**
**US-A- 5 585 509**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 066 330 B1

## Beschreibung

Die vorliegende Erfindung betrifft Katalysatorsysteme enthaltend speziell substituierte Metallocene, die vorteilhaft bei der Olefinpolymerisation eingesetzt werden können und ein Verfahren zu ihrer Herstellung sowie deren Verwendung in der Polymerisation von Olefinen.

Verfahren zur Herstellung von Polyolefinen mit Hilfe von löslichen, homogenen Katalysatorsystemen, bestehend aus einer Übergangsmetallkomponente vom Typ eines Metallocens und einer Cokatalysator-Komponente vom Typ eines Aluminoxans, einer Lewis-Säure oder einer ionischen Verbindung sind bekannt. Diese Katalysatoren liefern bei hoher Aktivität Polymere und Copolymere mit enger Molmassenverteilung.

Bei Polymerisationsverfahren mit löslichen, homogenen Katalysatorsystemen bilden sich starke Beläge an Reaktorwänden und Rührer aus, wenn das Polymer als Feststoff anfällt. Diese Beläge entstehen immer dann durch Agglomeration der Polymerpartikel, wenn Metallocen und/oder Cokatalysator gelöst in der Suspension vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern. Industriell in den modernen Polymerisationsverfahren in flüssigem Monomer oder in der Gasphase sind solche homogenen Katalysatorsysteme nicht einsetzbar.

Zur Vermeidung der Belagbildung im Reaktor sind geträgerte Katalysatorsysteme vorgeschlagen worden, bei denen das Metallocen und/oder die als Cokatalysator dienende Aluminiumverbindung auf einem anorganischen Trägermaterial fixiert werden.

Aus der EP-A-0,576,970 sind Metallocene und entsprechende geträgerte Katalysatorsysteme bekannt.

Ein häufiges Problem bei der technischen Anwendung von geträgerten Katalysatorsystemen besteht jedoch in der Ablösung der Metallocenkomponente vom Trägermaterial ("leeching"), wodurch es z.B. zur unerwünschten Belagsbildung im Reaktor kommt.

Es bestand somit die Aufgabe, neue Katalysatorsysteme zu finden, bei denen sich die Metallocenkomponente fest auf dem Träger fixieren läßt und unter technisch relevanten Polymerisationsbedingungen nicht vom Trägermaterial abgelöst werden.

Überraschenderweise wurde nun gefunden, daß durch Katalysatorsysteme enthaltend mindestens ein speziell substituiertes Metallocen, das eine kationische Gruppe als Substituenten enthält, die der Erfindung zugrunde liegende Aufgabe gelöst wird.

Gegenstand der vorliegenden Erfindung ist ein Katalysatorsystem enthaltend

a) mindestens einen Träger,
b) mindestens einen Cokatalysator
c) mindestens ein Metallocen der Formel (I),

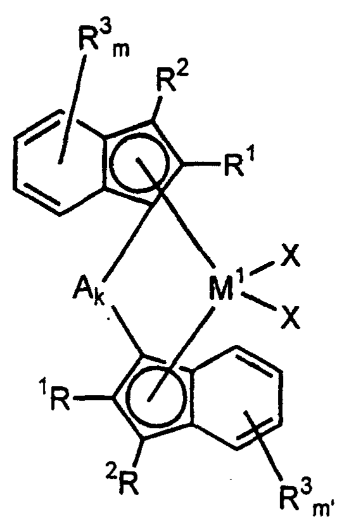

(I)

worin

$M^1$ ein Übergangsmetall der Gruppe 4 des Periodensystems der Elemente ist wie Titan, Zirkonium oder

Hafnium, bevorzugt Zirkonium,

$R^1$ und $R^2$ gleich oder verschieden sind und ein Wasserstoffatom, eine $C_1$-$C_{20}$-kohlenstoffhaltige Gruppe, bevorzugt eine $C_1$-$C_{20}$-Alkylgruppe, eine $C_6$-$C_{14}$-Arylgruppe, eine $C_2$-$C_{20}$-Alkenylgruppe, eine $C_2$-$C_{20}$-Alkinylgruppe, eine $C_7$-$C_{20}$-Alkyl-Arylgruppe, die gegebenenfalls ein oder mehrfach, gleich oder verschieden durch Halogen substituiert sein können, ein Halogenatom, eine -$SiMe_3$-Gruppe, eine $OSiMe_3$-Grupppe, bedeuten, besonders bevorzugt steht $R^1$ und/oder $R^2$ für Wasserstoff, Methyl, Ethyl, n-Propyl, iso-Propyl, n-Butyl, sec-Butyl, iso-Butyl, tert.-Butyl, n-Pentyl, verzweigtes Pentyl, n-Hexyl, verzweigtes Hexyl, Cyclohexyl, Benzyl,

$R^3$ gleich oder verschieden, ein Wasserstoffatom oder eine $C_1$-$C_{40}$-kohlenstoffhaltige Gruppe bedeutet, bevorzugt eine $C_1$-$C_{20}$-Alkylgruppe, die gegebenenfalls substituiert sein kann, insbesondere Methyl, Ethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty, Cyclohexyl, eine $C_6$-$C_{14}$-Arylgruppe, die gegebenenfalls substituiert sein kann, wie Phenyl, Tolyl, Xylyl, tert.-Butylphenyl, Ethylphenyl, Trifluormethylphenyl, Bis(trifluormethyl)phenyl, Methoxyphenyl, Fluorphenyl, Dimethylaminophenyl, Trimethyllammoniumpheny-iodid, Dimethylsulfoniumphenyl-bromid, Triethylphosphonium-phenyl-Triflat, Naphthyl, Acenaphthyl, Phenanthrenyl, Anthracenyl, eine $C_2$-$C_{20}$-Alkenylgruppe, eine $C_2$-$C_{20}$-Alkinylgruppe, eine $C_7$-$C_{20}$-Alkyl-Arylgruppe, ein Halogenatom, eine $SiMe_3$-Gruppe, eine $OSiMe_3$-Grupppe, eine $C_1$-$C_{20}$-heterocyclische Gruppe, die gegebenenfalls substituiert sein können, wobei der Begriff Heteroatom sämtliche Elemente mit Ausnahme von Kohlenstoff und Wasserstoff umfaßt und bevorzugt Atome der Gruppen 14, 15 oder 16 des Periodensystems der Elemente bedeutet, und zwei Reste $R^3$ gegebenenfalls ein mono- oder polycyclisches Ringsystem bilden können, das seinerseits substituiert sein kann, wobei mindestens einer der Reste $R^1$, $R^2$, $R^3$ eine kationische Gruppe $(-DE_L)^+ Y^-$ trägt bzw. ist

worin

D ein Atom der Gruppen 15 oder 16 des Periodensystems der Elemente (PSE), bevorzugt Stickstoff, Phosphor, Sauerstoff oder Schwefel,

E gleich oder verschieden ist und ein Wasserstoffatom, eine $C_1$-$C_{20}$-kohlenstoffhaltige Gruppe, bevorzugt eine $C_1$-$C_{20}$-Alkylgruppe, eine $C_6$-$C_{14}$-Arylgruppe, eine $C_2$-$C_{20}$-Alkenylgruppe, eine $C_2$-$C_{20}$-Alkinylgruppe, eine $C_7$-$C_{20}$-Alkyl-Arylgruppe, eine Trialkylsilyl-Gruppe, eine Triarylsilyl-Gruppe, eine Alkylarylsilyl-Gruppe, die gegebenenfalls substituiert sein können, bedeutet, und zwei Reste E gegebenenfalls ein mono- oder polycyclisches Ringsystem bilden können, das seinerseits substituiert sein kann, insbesondere bevorzugt ist E gleich ein Wasserstoffatom, Methyl, Ethyl, Propyl, Butyl, Allyl, Benzyl, Methoxymethyl, Benzyloxymethyl, 2-Methoxy-ethoxy-methyl, 2-Trimethylsilylethoxy-methyl, Trimethylsilyl,

L gleich 3 ist, wenn D ein Atom der Gruppe 15 des Periodensystems der Elemente ist, und gleich 2 ist wenn D ein Atom der Gruppe 16 des Periodensystems der Elemente ist,

Y Halogen, $C_1$-$C_{10}$-Alkylsulfonat, $C_1$-$C_{10}$-Halogen-alkylsulfonat, $C_6$-$C_{20}$-Arylsulfonat, $C_6$-$C_{20}$-Halogenarylsulfonat, $C_7$-$C_{20}$-Alkyl-arylsulfonat, $C_1$-$C_{20}$-Halogen-alkylcarboxylat, $C_1$-$C_{10}$-Alkylsulfat, Tetrafluorborat, Hexafluorphosphat, Hexafluorantimonat, Hexafluorarsenat, bevorzugt Chlorid, Bromid, Iodid, Triflat, Mesylat, Tosylat, Benzolsulfonat, Trifluoracetat, Methylsulfat, Tetrafluorborat oder Hexafluorphosphat, bedeutet,

m eine ganze Zahl, kleiner gleich 4 und größer gleich 1, bevorzugt 1 oder 2, besonders bevorzugt gleich 1, ist,

m' eine ganze Zahl, kleiner gleich 4 und größer gleich 1, bevorzugt 1 oder 2, besonders bevorzugt gleich 1, ist,

k gleich Null oder 1 ist, wobei für k = 0 ein unverbrücktes Metallocen, für k = 1 ein verbrücktes Metallocen vorliegt,

A eine Verbrückung der Formel

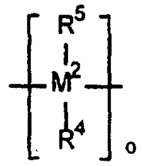
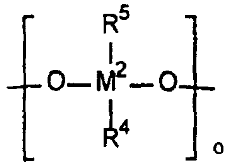
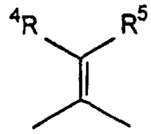

oder $=BR^4$, $AlR^4$, -S-, -SO-, $-SO_2-$, $=NR^4$, $=PR^4$, $=P(O)R^4$, o-Phenylen, 2,2'-Biphenylen, wobei

$M^2$ Kohlenstoff, Silizium, Germanium, Zinn, Stickstoff oder Phosphor ist, bevorzugt Kohlenstoff, Silizium oder Germanium, insbesondere Kohlenstoff oder Silizium,

o gleich 1, 2, 3 oder 4 ist, bevorzugt 1 oder 2,

$R^4$ und $R^5$ unabhängig voneinander gleich oder verschieden ein Wasserstoffatom, Halogen, eine $C_1$-$C_{20}$-kohlenstoffhaltige Gruppe, bevorzugt ein ($C_1$-$C_{20}$)Alkyl, insbesondere Methyl, ein ($C_6$-$C_{14}$)Aryl, insbesondere Phenyl- oder Naphthyl, ein ($C_1$-$C_{10}$)Alkoxy, ein ($C_2$-$C_{20}$)Alkenyl, ein ($C_7$-$C_{20}$)Arylalkyl, ein ($C_7$-$C_{20}$)Alkylaryl, ein ($C_6$-$C_{10}$)Aryloxy, ein ($C_1$-$C_{10}$)Fluoralkyl, ein ($C_6$-$C_{10}$)Halogenaryl, ein ($C_2$-$C_{10}$)Alkinyl, ein $C_3$-$C_{20}$-Alkylsilyl-, insbesondere Trimethylsilyl, Triethylsilyl, tert.-Butyldimethylsilyl, ein $C_3$-$C_{20}$-Arylsilyl-, insbesondere Triphenylsilyl, oder ein $C_3$-$C_{20}$-Alkylarylsilyl-, insbeosndere Dimethylphenylsilyl, Diphenylsilyl oder Diphenyl-tert.-butylsilyl bedeuten und $R^4$ und $R^5$ gegebenenfalls ein mono- oder polycyclisches Ringsystem bilden können,

Bevorzugt ist A gleich Dimethylsilandiyl, Dimethylgermandiyl, Ethyliden, Methylethyliden, 1,1-Dimethylethyliden, 1,2-Dimethylethyliden, Tetramethylethyliden, Isopropyliden, Phenylmethylmethyliden, Diphenylmethyliden, besonders bevorzugt Dimethylsilandiyl oder Ethyliden.

Die Reste X sind gleich oder verschieden und bedeuten ein Wasserstoffatom, ein Halogenatom wie Fluor, Chlor, Brom oder Iod, eine Hydroxylgruppe, eine $C_1$-$C_{10}$-Alkylgruppe wie beispielsweise Methyl, Ethyl, Propyl, iso-Propyl, n-Butyl, iso-Butyl, sec-Butyl, tert.-Butyl, Hexyl, Cyclohexyl, eine $C_6$-$C_{15}$-Arylgruppe wie beispielsweise Phenyl, Naphthyl, eine $C_1$-$C_{10}$-Alkoxygruppe wie beispielsweise Methoxy, Ethoxy, tert.-Butoxy, eine $C_6$-$C_{15}$-Aryloxygruppe, eine Benzylgruppe, bevorzugt ein Chloratom, ein Fluoratom, eine Methylgruppe, eine Benzylgruppe, besonders bevorzugt ein Chloratom oder eine Methylgruppe.

Besonders bevorzugte Metallocene der Formel (I) haben die Formel (I*),

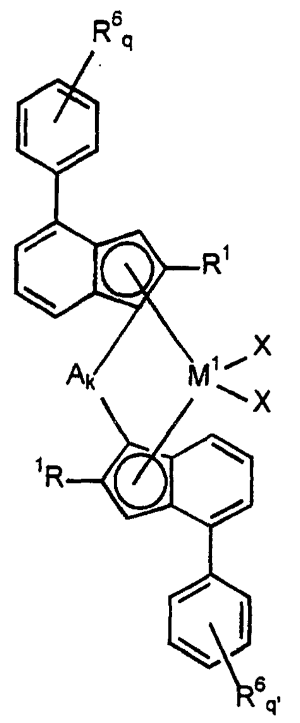

(I*)

worin

$M^1$, A, $R^1$, k und X wie in Formel (I) definiert sind und

$R^6$ gleich oder verschieden, ein Wasserstoffatom oder eine $C_1$-$C_{40}$-kohlenstoffhaltige Gruppe bedeutet, bevorzugt eine $C_1$-$C_{20}$-Alkylgruppe, die gegebenenfalls substituiert sein kann, insbesondere Methyl, Ethyl, Trifluormethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty, Cyclohexyl, eine $C_6$-$C_{14}$-Arylgruppe, die gegebenenfalls substituiert sein kann, insbesondere Phenyl, eine $C_2$-$C_{20}$-Alkinylgruppe, eine $C_7$-$C_{20}$-Alkyl-Arylgruppe, Halogen, eine $OR^4$-Gruppe, eine $SiR^4_3$-Gruppe, eine $NR^4_2$-Gruppe, eine $SR^4$-Gruppe, und zwei Reste $R^4$ und $R^6$, jeweils oder miteinander, ein mono- oder polycyclisches Ringsystem bilden können, das seinerseits substituiert sein kann, wobei $R^4$ wie in Formel (I) definiert ist, und mindestens einer der Reste $R^6$ eine kationische Gruppe $(-DE_L)^+ Y^-$ trägt,
worin D, E, L und Y wie in Formel (I) definiert sind,

q ist eine ganze Zahl, kleiner gleich 5 und größer gleich 1, bevorzugt 1 oder 2, besonders bevorzugt gleich 1,

q' ist eine ganze Zahl, kleiner gleich 5 und größer gleich 1, bevorzugt 1 oder 2, besonders bevorzugt gleich 1,

Erläuternde, jedoch nicht einschränkende Beispiele für erfindungsgemäße Metallocene der Formel (I) sind:

Dimethylsilandiylbis(2-methyl-4-(4'-trimethylammonium-phenyl)-indeny)l-dichlorozirkonium-diiodid
Dimethylsilandiylbis(2-methyl-4-(4'-trimethylammonium-phenyl)-indeny)l-dichlorotitan-diiodid
Dimethylsilandiylbis(2-methyl-4-(4'-trimethylammonium-phenyl)-indeny)l-dichlorohafnium-diiodid
Dimethylsilandiylbis(2-methyl-4-(3'-trimethylammonium-phenyl)-indenyl)-dichlorozirkonium-diiodid
Dimethylsilandiylbis(2-methyl-4-(2'-trimethylammonium-phenyl)-indenyl)-dichlorozirkonium-diiodid
Dimethylsilandiylbis(2-methyl-4-(3',5'-bis(trimethylammonium)-phenyl)-indenyl)-dichlorozirkonium-tetraiodid
Dimethylsilandiylbis(2-methyl-4-(4'-trimethylammonium-naphthyl)-indeny)l-dichlorozirkonium-diiodid
Dimethylsilandiylbis(2-methyl-4-(4'-trimethylammonium-phenyl)-indeny)l-dichlorozirkonium-ditosylat
Dimethylsilandiylbis(2-ethyl-4-(4'-trimethylammonium-phenyl)-indenyl)-dichlorozirkonium-ditriflat
Dimethylsilandiylbis(2-methyl-4-(4'-dimethylammonium-phenyl)-indenyl)-dichlorozirkonium-dichlorid
Dimethylsilandiylbis(2-methyl-4-(4'-trimethylammonium-phenyl)-indeny)l-dichlorozirkonium-bis-tetrafluorborat
Dimethylsilandiylbis(2-methyl-4-(4'-N-methyl-N-pyrrolidino-phenyl)-indeny)l-dichlorozirkonium-diiodid
Dimethylsilandiylbis(2-methyl-4-(4'-dimethylammonium-phenyl)-indenyl)-dichlorotitan-dichlorid
Dimethylsilandiylbis(2-methyl-4-(4'-dimethyl(methoxymethyl)ammonium-phenyl)-indenyl)-dichlorozirkonium-dichlorid
Dimethylsilandiylbis(2-methyl-4-(4'-dimethyl(2''-methoxy-ethoxy-methyl)ammonium-phenyl)-indenyl)-dichlorozirkonium-dichlorid
Dimethylsilandiylbis(2-methyl-4-(4'-dimethyl(benzyloxymethyl)ammonium-phenyl)-indenyl)-dichlorozirkonium-dichlorid
Dimethylsilandiylbis(2-methyl-4-(4'-dimethyl-(2''-trimethylsilyl-ethoxy-methyl)ammonium-phenyl)-indenyl)-dichlorohafnium-dichlorid
Dimethylsilandiylbis(2-methyl-4-(4'-dimethylbenzylammonium-phenyl)-indenyl)-dichlorozirkonium-dichlorid
Dimethylsilandiylbis(2-methyl-4-(4'-dimethylallylammonium-phenyl)-indenyl)-dichlorozirkonium-diiodid
Dimethylsilandiylbis(2-methyl-4-(4'-triethylammonium-phenyl)-indenyl)-dichlorozirkonium-diiodid
Dimethylsilandiylbis(2-ethyl-4-(4'-dimethyl-(2''-trimethylsilyl-ethoxy-methyl)ammonium-phenyl)-indenyl)-dichlorohafnium-dichlorid
Dimethylsilandiylbis(2-ethyl-4-(4'-dimethylbenzylammonium-phenyl)-indenyl)-dichlorozirkonium-dichlorid
Dimethylsilandiylbis(2-ethyl-4-(4'-dimethylallylammonium-phenyl)-indenyl)-dichlorozirkonium-diiodid
Dimethylsilandiylbis(2-ethyl-4-(4'-trimethylammonium-phenyl)-indenyl)-dichlorozirkonium-diiodid
Dimethylsilandiylbis(2-n-butyl-4-(4'-trimethylammonium-phenyl)-indenyl)-dichlorozirkonium-diiodid
Dimethylsilandiylbis(2-isopropyl-4-(4'-triethylammonium-phenyl)-indenyl)-dichlorozirkonium-dibromid
Dimethylsilandiylbis(2-iso-butyl-4-(4'-triethylammonium-phenyl)-indenyl)-dichlorozirkonium-ditriflat
Dimethylsilandiylbis(2-ethyl-4-(4'-triethylphosphomium-phenyl)-indenyl)-dichlorozirkonium-diiodid
Dimethylsilandiylbis(2-methyl-4-(4'-dimethylsulfonium-phenyl)-indenyl)-dichlorozirkonium-dibromid
Dimethylsilandiylbis(2-ethyl-4-(4'-dimethylsulfonium-phenyl)-indenyl)-dichlorozirkonium-dibromid
Dimethylsilandiylbis(2-methyl-4-(3'-dimethylsulfonium-phenyl)-indenyl)-dichlorozirkonium-dibromid
Dimethylsilandiylbis(2-methyl-4-(2'-dimethylsulfonium-phenyl)-indenyl)-dichlorozirkonium-dibromid
Dimethylsilandiylbis(2-methyl-4-(3',5'-Bis(dimethylsulfonium)-phenyl)-indenyl)-dichlorozirkonium-tetrabromid
Dimethylsilandiylbis(2-methyl-4-(4'-dibenzylsulfonium-phenyl)-indenyl)-dichlorozirkonium-dibromid
Dimethylsilandiylbis(2-methyl-4-(4'-methyl(methoxymethyl)sulfonium-phenyl)-indenyl)-dichlorozirkonium-dichlorid
Dimethylsilandiylbis(2-methyl-4-(4'-diallylsulfonium-phenyl)-indenyl)-dichlorozirkonium-dibromid
Dimethylsilandiylbis(2-methyl-4-(3'-diphenylethylphosphonium-phenyl)-indenyl)-dichlorozirkonium-diiodid
Dimethylsilandiylbis(2-methyl-4-(3'-trimethylphosphonium-phenyl)-indenyl)-dichlorozirkonium-ditriflat
Methylphenylsilandiylbis(2-iso-butyl-4-(4'-triethylammonium-phenyl)-indenyl)-dichlorozirkonium-ditosylat
1,2-Ethandiyl-bis(2-methyl-4-(3'-dimethylammonium-phenyl)-indenyl)-dichlorozirkonium-bis-trifluoracetat
1,2-Ethandiyl-bis(2-methyl-4-(4'-dimethylsulfonium-phenyl)-indenyl)-dichlorozirkonium-dibromid

1,2-Ethandiyl-bis(2-methyl-4-(3'-diphenylethylphosphonium-phenyl)-indenyl)-dichlorozirkonium-diiodid
Dimethylsilandiylbis(2-methyl-5-trimethylammonium-indenyl)-dichlorozirkonium-dichlorid
Dimethylsilandiylbis(2-methyl-5-trimethylphosphonium-indenyl)-dichlorozirkonium-dichlorid
1,2-Ethandiylbis(2-methyl-4-dimethylbenzylammonium-indenyl)-dichlorozirkonium-dibromid
1,2-Ethandiylbis(2-methyl-4-phenyl-5-dimethylbenzylammonium-indenyl)-dichlorozirkonium-dibromid
Dimethylsilandiylbis(2-methyl-4-phenyl-6-trimethylammonium-indenyl)-dichlorozirkonium-dichlorid
Dimethylsilandiylbis(2-methyl-5-dimethylsulfonium-indenyl)-dichlorozirkonium-dibromid
Dimethylsilandiylbis(2-methyl-4-(4'-(2"-trimethylammonium-ethyl)-phenyl-indenyl)-dichlorozirkonium-dichlorid
Dimethylsilandiylbis(2-methyl-4-(4'-(3"-dimethylsulfonium-propyl)-phenyl-indenyl)-dichlorozirkonium-diiodid
Dimethylsilandiylbis(2-methyl-4-(3'-(2"-trimethylammonium-ethyl)-phenyl-indenyl)-dichlorozirkonium-dichlorid
Dimethylsilandiylbis(2-methyl-4--(2'-trimethylammonium-ethyl)-indenyl)-dichlorozirkonium-dichlorid
Dimethylsilandiylbis(2-(2'-trimethylammonium-ethyl)-indenyl)-dichlorozirkonium-dichlorid
Dimethylsilandiylbis(2-(2'-trimethylammonium-ethyl)-4-phenyl-indenyl)-dichlorozirkonium-dibromid
Dimethylsilandiylbis(2-(2'-dimethylsulfonium-ethyl)-4,6-dimethyl-indenyl)-dichlorozirkonium-diiodid

Das erfindungsgemäße Katalysatorsystem enthält mindestens einen Cokatalysator (Komponente b). Die Cokatalysatorkomponente, die erfindungsgemäß im Katalysatorsystem enthalten sein kann, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel II

$$(R\,AlO)_p \qquad (II)$$

verwendet. Aluminoxane können z.B. cyclisch wie in Formel (III)

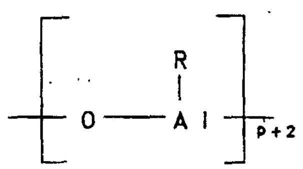

(III)

oder linear wie in Formel (IV)

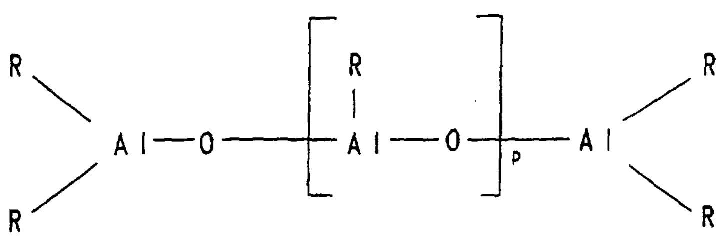

(IV)

oder vom Cluster-Typ wie in Formel (V) sein, wie sie in der Literatur beschrieben werden (JACS 117 (1995), 6465-74, Organometallics 13 (1994), 2957-2969.

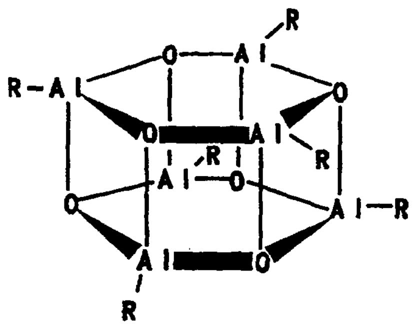

(V)

Die Reste R in den Formeln (II), (III), (IV) und (V) können gleich oder verschieden sein und eine $C_1$-$C_{20}$-Kohlenwasserstoffgruppe, bevorzugt eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeuten.
Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird. Zur Herstellung eines Aluminoxans mit verschiedenen Alkylgruppen R werden entsprechend der gewünschten Zusammensetzung und Reaktivität zwei verschiedene Aluminiumtrialkyle ($AlR_3$ + $AlR'_3$) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die $C_1$-$C_{20}$-kohlenstoffhaltige Gruppen enthalten, wie verzweigte oder unverzweigte Alkyl- oder Halogenalkyl, wie z. B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl,
3,5-Difluorophenyl, Pentachlorophenyl, Pentafluorophenyl, 3,4,5 Trifluorophenyl und 3,5 Di(trifluoromethyl)phenyl.

Beispiele für Lewis Säuren sind Trimethylaluminium, Triethylaluminium, Triisobutylaluminium, Tributylaluminium, Trifluoroboran, Triphenylboran, Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl) boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, $SbF_6$-, $CF_3SO_3$- oder $ClO_4$-. Als kationisches Gegenion werden Lewis-Basen wie z.B. Metyhlamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind

Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,

N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminät.
Bevorzugt sind Triphenylcarbeniumtetrakis(pentafluorophenyl)borat und/oder
N,N-Dimethylaniliniumtetrakis(pentafluorophenyl)borat.

Es können auch Gemische mindestens einer Lewis-Säure und mindestens einer ionischen Verbindung eingesetzt werden.
Als Cokatalysatorkomponenten sind ebenfalls Boran- oder Carboran- Verbindungen wie z.B. 7,8-Dicarbaundecaboran (13),

Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat)cobaltate(III),
Tri(butyl)ammoniumbis(undecahydrid-7,8-dicarbaundecaborat)ferrat(III) von Bedeutung.

Die Trägerkomponente (Komponente a) des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2, 3, 4, 5, 13, 14, 15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, $ZrO_2$, $TiO_2$ oder $B_2O_3$ ,um nur einige zu nennen.

Die verwendeten Trägermaterialien weisen eine spezifische Oberfläche im Bereich von 10 bis 1000 $m^2/g$, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 $m^2/g$, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.
Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden.
Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie
Siliciumtetrachlorid, Chlortrimethylsilan, Dimethylaminotrichlorsilan oder metallorganische Verbindungen von Aluminium-, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120°C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Die erfindungsgemäß eingesetzten Metallocene sind durch Umsetzung eines Metallocens der Formel (Ia) mit einem Reagenz EY zugänglich.

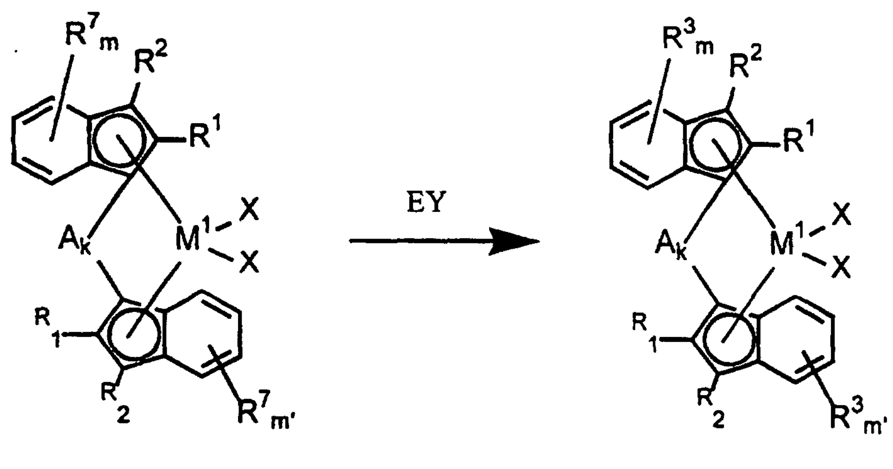


(Ia) (I)

Die Reste $R^1$, $R^2$, $R^3$, A, $M^1$, X, E, Y, k, m und m' sind definiert wie in Formel (I), und $R^7$ bedeutet, gleich oder verschieden, ein Wasserstoffatom oder eine $C_1$-$C_{40}$-kohlenstoffhaltige Gruppe, beispielsweise eine $C_1$-$C_{20}$-Alkylgruppe, die substituiert sein kann, wie Methyl, Ethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty, Cyclohexyl, eine $C_6$-$C_{14}$-Arylgruppe, die substituiert sein kann, wie Phenyl, Tolyl, Xylyl, tert.-Butylphenyl, Ethylphenyl, Trifluormethylphenyl, Bis(trifluormethyl)phenyl, Methoxyphenyl, Fluorphenyl, Dimethylaminophenyl, Methylthiophenyl, Diethylphosphino-phenyl, Naphthyl, Acenaphthyl, Phenanthrenyl, Anthracenyl, eine $C_2$-$C_{20}$-Alkenylgruppe, eine $C_2$-$C_{20}$-Alkinylgruppe, eine $C_7$-$C_{20}$-Alkyl-Arylgruppe, ein Halogenatom, eine $SiMe_3$-Gruppe, eine $OSiMe_3$-Grupppe, eine $C_1$-$C_{20}$-heterocyclische Gruppe, die substituiert sein können, wobei der Begriff Heteroatom sämtliche Elemente mit Ausnahme von Kohlenstoff und Wasserstoff umfaßt und bevorzugt Atome der Gruppen 14, 15 oder 16 des Periodensystems der Elemente bedeutet, und zwei Reste $R^7$ ein mono- oder polycyclisches Ringsystem bilden können, das seinerseits substituiert sein kann, und die Metallocene der Formel (Ia) dadurch gekennzeichnet sind, daß mindestens einer der Reste $R^1$, $R^2$, $R^7$ eine Gruppe $DE_{L-1}$ trägt bzw. ist, wobei D ein Atom der Gruppen 15 oder 16 des Periodensystems der Elemente (PSE) bedeutet, insbesondere Stickstoff, Phosphor, Sauerstoff oder Schwefel, und E und L wie in Formel (I) definiert sind.

Die Darstellung von Metallocenen der Formel (Ia) erfolgt nach literaturbekannten Verfahren (z.B. EP 576 970 A1; Chem. Lett., 1991, 11, S.2047 ff; Journal of Organometallic Chem., 288 (1985) 63 - 67 und dort zitierte Dokumente).

Bei dem Reagenz EY handelt es sich um eine, einen Rest E übertragende Verbindung, wobei E und Y wie

in Formel (I) definiert sind.

Erläuternde, jedoch nicht einschränkende Beispiele für das Reagenz EY sind: Methyliodid, Methylbromid, Methylchlorid, Methyltriflat, Methyltrifluoracetat, Methansulfonsäuremethylester, p-Toluolsulfonsäuremethylester, Dimethylsulfat, Trimethyloxoniumtetrafluoroborat, Trimethyloxoniumhexafluorphosphat, Ethyliodid, Ethylbromid, Ethylchlorid, Triethyloxoniumtetrafluoroborat, Triethyloxoniumhexafluorphosphat, Propyliodid, Propylbromid, Propyltriflat, Butylbromid, Butyliodid, Butylchlorid, Pentylbromid, Octylbromid, Benzylchlorid, Benzylbromid, Benzyltriflat, Allylbromid, Allylchlorid, p-Methoxybenzylchlorid, Trimethylsilylchlorid, Trimethylsilylbromid, Trimethylsilyliodid, Trimethylsilyltriflat, tert.-Butyldimethylsilylchlorid, tert.-Butyldimethylsilyltriflat, Triphenylsilylchlorid, Triphenylsilyliodid, Triphenylsilyltriflat, Methoxymethylchlorid (MOMCI), 2-Methoxy-ethoxy-methylchlorid (MEMCl), 2-Trimethylsilyl-ethoxy-methylchlorid (SEMCl), Benzyloxymethylchlorid (BOMCI), Fluorwasserstoff, Chlorwasserstoff, Bromwasserstoff, Iodwasserstoff, Trifluoressigsäure, Methansulfonsäure, Trifluormethansulfonsäure, p-Toluolsulfonsäure, Schwefelsäure, Perchlorsäure, Essigsäure, Triethylamin-hydrochlorid, Trimethylamin-hydrofluorid, Tetrafluorboraäure-Diethyletherat oder Hexafluorphosphorsäure.

Das erfindungsgemäße Verfahren kann in Gegenwart eines geeigneten Lösungsmittels oder in Substanz durchgeführt werden. Nichteinschränkende Beispiele für geeignete Lösungsmittel sind Kohlenwasserstoffe, die halogeniert sein können, wie Benzol, Toluol, Xylol, Mesitylen, Ethylbenzol, Chlorbenzol, Dichlorbenzol, Fluorbenzol, Dekalin, Pentan, Hexan, Cyclohexan, Dichlormethan, Chloroform, Tetrachlormethan, 1,2-Dichlorethan, Trichlorethylen, Ether wie Diethylether, Di-n-Butylether, MTBE, THF, DME, Anisol, Triglyme, Dioxan, Amide wie DMF, Dimethylacetamid, NMP, Sulfoxide wie DMSO, Phosphoramide wie. Hexamethylphosphorsäuretriamid, Harnstoff-Derivate wie DMPU, Ketone wie Aceton, Ethylmethylketon, Ester wie Essigsäureethylester, Nitrile wie Acetonitril sowie beliebige Gemische aus jenen Stoffen.

Das erfindungsgemäße Verfahren wird im allgemeinen in einem Temperaturbereich von -100°C bis +500°C durchgeführt, bevorzugt in einem Temperaturbereich von - 78°C und +200°C, besonders bevorzugt bei einer Temperatur zwischen 0°C und 100°C.
Die Umsetzung kann in einem Einphasensystem oder in einem Mehrphasensystem durchgeführt werden.
Das molare Verhältnis von Reagenz EY zu Metallocen (Ia) liegt im allgemeinen zwischen 0,5 und 100, bevorzugt zwischen 1und 10.

Die Konzentration an Metallocen (Ia) bzw. an Reagenz EY in der Reaktionsmischung liegt im allgemeinen im Bereich zwischen 0,001 mol/l und 8 mol/l, bevorzugt im Bereich zwischen 0,01 und 3 mol/l, besonders bevorzugt im Bereich zwischen 0,1 mol/l und 2 mol/l.

Die Dauer der Umsetzung von Metallocenen der Formel (Ia) mit einem Reagenz EY liegt im allgemeinen im Bereich zwischen 5 Minuten und 1 Woche, bevorzugt im Bereich zwischen 15 Minuten und 48 Stunden.

Das erfindungsgemäße Katalysatorsystem kann gegebenenfalls weitere Additivkomponenten enthalten. Es können auch Mischungen zweier oder mehrere Metallocenverbindungen der Formel (I) oder Mischungen von Metallocenverbindungen der Formel (I) mit anderen Metallocenen oder Halbsandwichverbindungen eingesetzt werden, z. B. zur Herstellung von Polyolefinen mit breiter oder multimodaler Molmassenverteilung.

Das erfindungsgemäße Katalysatorsystem wird hergestellt, indem mindestens ein Metallocen der Formel (I), mindestens ein Cokatalysator und mindestens ein inertisierter Träger gemischt werden.

Zur Darstellung des geträgerten Katalysatorsystems wird mindestens eine der oben beschriebenen Metallocen-Komponenten in einem geeigneten Lösemittel mit mindestens einer Cokatalysatorkomponente in Kontakt gebracht, wobei bevorzugt ein lösliches Reaktionsprodukt, ein Addukt oder ein Gemisch erhalten wird.
Die so erhaltene Zubereitung wird dann mit dem dehydratisierten oder inertisierten Trägermaterial vermischt, das Lösemittel entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:

a) Herstellung einer Metallocen/Cokatalysator-Mischung in einem geeigneten Löse- oder Suspensionsmittel, wobei die Metallocen-Komponente eine der zuvor beschriebenen Strukturen besitzt,
b) Aufbringen der Metallocen/Cokatalysatormischung auf einen porösen, bevorzugt anorganischen dehydratisierten Träger,
c) Entfernen des Hauptanteils an Lösemittel von der resultierenden Mischung,
d) Isolierung des geträgerten Katalysatorsystems,
e) gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der Metallocen/Cokatalysator-Mischung sind Kohlenwasserstoffe

und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocen- und Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10 : 1 bis 1000 : 1 eingestellt, ganz besonders bevorzugt ein Verhältnis von 50 : 1 bis 500 : 1. Im Fall von Methylaluminoxan werden bevorzugt 30 %ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösemittel aufgelöst. Es ist auch möglich, das Metallocen getrennt in einem geeigneten Lösemittel aufzulösen und diese Lösung anschließend mit der Aluminoxan-Lösung zu vereinigen. Bevorzugt wird Toluol verwendet.
Die Voraktivierungszeit beträgt 1 Minute bis 200 Stunden.
Die Voraktivierung kann bei Raumtemperatur (25°C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100°C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.
Das Volumen der voraktivierten Lösung bzw. des Metallocen-Cokatalysatorgemisches kann 100 % des Gesamtporenvolumens des eingesetzten Trägermaterials überschreiten oder aber bis zu 100 % des Gesamtporenvolumens betragen.
Die Temperatur, bei der die voraktivierte Lösung bzw. das Metallocen-Cokatalysatorgemisch mit dem Trägermaterial in Kontakt gebracht wird, kann im Bereich zwischen 0 und 100°C variieren. Niedrigere oder höhere Temperaturen sind aber auch möglich.

Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum undloder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60°C erfordert. Das freie Lösemittel ist der sichtbare Anteil an Lösemittel in der Mischung. Unter Restlösemittel versteht man den Anteil, der in den Poren eingeschlossen ist. Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins bevorzugt eines $\alpha$-Olefins (beispielsweise Styrol oder Phenyldimethylvinylsilan) als aktivitätssteigernde Komponente oder beispielsweise eines Antistatikums (wie in US Serial No. 08/365280 beschrieben) zugesetzt werden. Das molare Verhältnis von Additiv zu Metallocenkomponente Verbindung I beträgt dabei bevorzugt zwischen 1 : 1000 bis 1000 : 1, ganz besonders bevorzugt 1 : 20 bis 20 : 1.

Die vorliegende Erfindung beschreibt auch ein Verfahren zur Herstellung eines Polyolefins durch Polymerisation einer oder mehrerer Olefine in Gegenwart des erfindungsgemäßen Katalysatorsystems, enthaltend mindestens eine Übergangsmetallkomponente der Formel (I). Unter dem Begriff Polymerisaton wird eine Homopolymerisation wie auch eine Copolymerisation verstanden.

Bevorzugt werden Olefine der Formel $R_m$-CH=CH-$R_n$ polymerisiert, worin $R_m$ und $R_n$ gleich oder verschieden sind und ein Wasserstoffatom oder einen kohlenstoffhaltigen Rest mit 1 bis 20 C-Atomen, insbesondere 1 bis 10 C-Atome, bedeuten, und $R_m$ und $R_n$ zusammen mit den sie verbindenden Atomen einen oder mehrere Ringe bilden können.

Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden in dem erfindungsgemäßen Verfahren Propen oder Ethen homopolymerisiert, oder Propen mit Ethen und/oder mit einem oder mehreren 1-Olefinen mit 4 bis 20 C-Atomen, wie Hexen, und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere oder Ethen/Propen/1,4-Hexadien-Terpolymere.

Die Polymerisation wird bei einer Temperatur von - 60 bis 300°C, bevorzugt 50 bis 200°C, ganz besonders bevorzugt 50 - 80°C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab. Als Molmassenregler und/oder zur Steigerung der Aktivität wird, falls erforderlich, Wasserstoff zugegeben.

Bei der Polymerisation kann außerdem ein Antistatikum zusammen mit oder getrennt von dem eingesetzten Katalysatorsystem in das Polymerisationssystem eindosiert werden.

Die mit dem erfindungsgemäßen Katalysatorsystem dargestellten Polymere zeigen eine gleichmäßige Kommorphologie und weisen keine Feinkornanteile auf. Bei der Polymerisation mit dem erfindungsgemäßen Katalysatorsystem treten keine Beläge oder Verbackungen auf.

Mit dem erfindungsgemäßen Katalysatorsystem werden Polymere, wie Polypropylen mit außerordentlich hoher Stereo- und Regiospezifität erhalten.

Besonders charakteristisch für die Stereo- und Regiospezifität von Polymeren, insbesondere von Polypropylen, ist die Triaden-Taktizität (TT) und der Anteil an 2-1-insertierten Propeneinheiten (RI), die sich aus den $^{13}$C-NMR-Spektren ermitteln lassen.

Die $^{13}$C-NMR- Spektren werden in einem Gemisch aus Hexachlorbutadien und Tetrachlorethan-$d_2$ bei erhöhter Temperatur (365 K) gemessen. Alle $^{13}$C-NMR-Spektren der gemessenen Polypropylen-Proben werden auf das Resonanzsignal von Tetrachlorethan-$d_2$ (d = 73.81 ppm) geeicht.

Zur Bestimmung der Triaden-Taktizität des Polypropylens werden die Methyl-Resonanzsignale im $^{13}$C-NMR-Spektrum zwischen 23 und 16 ppm betrachtet; vgl. J. C. Randall, Polymer Sequence Determination: Carbon-13 NMR Method, Academic Press New York 1978; A. Zambelli, P. Locatelli, G. Bajo, F. A. Bovey, Macromolucules 8 (1975), 687-689; H. N. Cheng, J. A. Ewen, Makromol. Chem. 190 (1989), 1931-1943. Drei aufeinander folgende 1-2-insertierte Propeneinheiten, deren Methylgruppen in der "Fischer-Projektion" auf der gleichen Seite angeordnet sind, bezeichnet man als mm - Triade (d = 21.0 ppm bis 22.0 ppm). Zeigt nur die zweite Methylgruppe der drei aufeinander folgenden Propeneinheiten zur anderen Seite, spricht man von einer rr-Triade (d = 19.5 ppm bis 20.3 ppm) und zeigt nur die dritte Methylgruppe der drei aufeinander folgenden Propeneinheiten zur anderen Seite, von einer mr-Triade (d = 20.3 ppm bis 21.0 ppm). Die Triaden-Taktizität berechnet man nach folgender Formel:

$$TT\ (\%) = mm / (mm + mr + rr) \cdot 100$$

Wird eine Propeneinheit invers in die wachsende Polymerkette insertiert, spricht man von einer 2-1-Insertion; vgl. T. Tsutsui, N. Ishimaru, A. Mizuno, A. Toyota, N.

Kashiwa, Polymer 30, (1989), 1350-56. Folgende verschiedene strukturelle Anordnungen sind möglich:

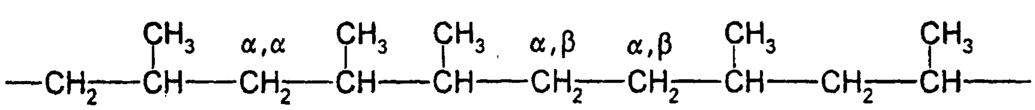

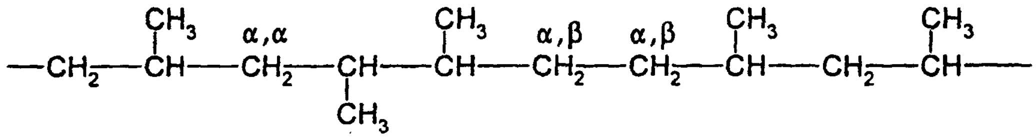

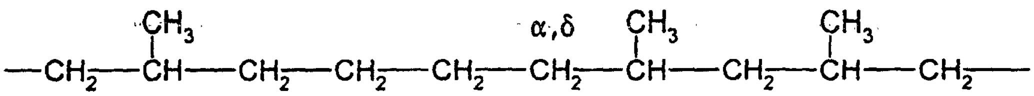

Der Anteil an 2-1-insertierten Propeneinheiten (RI) kann nach folgender Formel berechnet werden:

$$RI\ (\%) = 0.5\ Ia,\beta\ (Ia,a + Ia,\beta + Ia,d) \cdot 100,$$

wobei

Ia,a die Summe der Intensitäten der Resonanzsignale bei d = 41.84, 42.92 und 46.22 ppm,
Ia,β die Summe der Intensitäten der Resonanzsignale bei d = 30.13, 32.12, 35.11 und 35.57 ppm

sowie

Ia,d die Intensität des Resonanzsignals bei d = 37.08 ppm bedeuten.

Das isotaktische Polypropylen, das mit dem erfindungsgemäßen Katalysatorsystem hergestellt werden ist, zeichnet sich durch einen Anteil an 2-1-insertierten Propeneinheiten RI < 0.5% bei einer Triaden-Taktizität TT > 98.0% aus, wobei $M_w/M_n$ des erfindungsgemäßen Polypropylens zwischen 2.5 und 3.5 liegt. Die mit dem erfindungsgemäßen Katalysatorsystem herstellbaren Copolymere zeichnen sich durch eine gegenüber dem Stand der Technik deutlich höhere Molmasse aus. Gleichzeitig sind solche Copolymere durch Einsatz des erfindungsgemäßen Katalysatorsystems mit hoher Produktivität bei technisch relevanten Prozessparametern ohne Belagsbildung herstellbar.
Die Erfindung wird durch folgende, die Erfindung jedoch nicht einschränkenden Beispiele erläutert.
Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

Beispiel 1: Dimethylsilandiylbis(2-methyl-4-(4'-trimethylammonium-phenyl)-indenyl)-dichlorozirkonium-diiodid (1)

4.5 g (0.02 mol) 2-Methyl-7-brom-1-indanon, 3.63 g (0.022 mol) 4-N,N-Dimethylamino-phenylboronsäure und 4.66 g (0.044 mol) Natriumcarbonat wurden in einem Gemisch aus 80 ml 1,2-Dimethoxyethan und 25 ml Wasser vorgelegt, mehrfach entgast und mit Argon gesättigt. 90 mg (0.4 mmol) Palladiumacetat und 0.2 g (0.8 mmol) Triphenylphosphin wurden zugegeben und das Reaktionsgemisch 3 h (Stunden) bei 80°C gerührt. Nach Zugabe von 100 ml Wasser wurde mit Diethylether extrahiert, die vereinigten organische Phasen mit Wasser gewaschen und über Magnesiumsulfat getrocknet. Nach Entfernung des Lösungsmittels und Säulenfiltration über neutralem Aluminiumoxid (Dichlormethan) wurden 5.1 g 2-Methyl-7-(4'-N,N-dimethylamino-phenyl)-1-indanon erhalten.
$^1$H-NMR (300 MHz, $CDCl_3$): 7.58-7.24 (m, 5H), 6.78 (d, 2H), 3.38 (m, 1H), 3.01 (s, 6H), 2.78-2.65 (m, 2H), 1.28 (d, 2H);
Zu einer Lösung von 5.0 g (0.019 mol) 2-Methyl-7-(4'-N,N-dimethylamino-phenyl)-1-indanon in 100 ml THF/Methanol (2:1) wurden bei 0°C 760 mg (20 mmol) Natriumborhydrid zugesetzt und 18 h bei Raumtemperatur gerührt. Die Reaktionsmischung wurde auf Eiswasser gegeben, mit konz. Salzsäure bis pH 1 versetzt, dann mit 2 M Natriumhydroxid-Lösung auf pH 9 gebracht und mehrmals mit Dichlormethan extrahiert. Die vereinigten organische Phasen wurden mit Wasser sowie Natriumchlorid-Lösung gewaschen und über Magnesiumsulfat getrocknet. Nach Entfernung des Lösungsmittels erhält man das Rohprodukt 2-Methyl-7-(4'-N,N-dimethylamino-phenyl)-1-indanol, welches in 100 ml Toluol aufgenommen wurde. Nach Zugabe von 3.1 g (0.027 mol) Trifluoressigsäure wurde 2 h bei 100°C gerührt. Anschließend wurde mit 2 M Natriumhydroxid-Lösung bis pH 9 versetzt, die Phasen getrennt und das Lösungsmittel entfernt. Es wurden 4.6 g 2-Methyl-4-(4'-N,N-dimethylamino-phenyl)-inden isoliert.
$^1$H-NMR (300 MHz, $CDCl_3$): 7.46-7.21 (m, 5H), 6.86-6.81 (m, 2H), 6.72 (s, 1H), 3.36 (s, 2H), 3.05 (s, 6H), 2.15 (s, 3H);
Eine Lösung von 10.0 g (40.2 mmol) 2-Methyl-4-(4'-dimethylamino-phenyl)-inden in 100 ml Toluol und 5 ml

THF wurden bei Raumtemperatur mit 16.7 ml (44 mmol) einer 20% Lösung von Butyllithium in Toluol versetzt und 2 h auf 80°C erhitzt. Anschließend wurde die Suspension auf 0°C gekühlt und mit 2.76 g (21 mmol) Dimethyldichlorsilan versetzt. Die Reaktionsmischung wurde noch 1 h auf 80°C erhitzt und anschließend mit 50 ml Wasser gewaschen. Das Lösungsmittel wurde im Vakuum entfernt und der Rückstand aus Heptan bei -20°C umkristallisiet. Es wurden 7.8 g Ligand als farblose Kristalle gewonnen. 5.0 g (9 mmol) des Liganden wurden in 70 ml Diethylether gelöst, bei Raumtemperatur mit 6.84 ml (18 mmol) einer 20%igen Lösung von Butyllithium in Toluol versetzt und anschließend 3 Stunden zum Rückfluß erhitzt. Das Lösungsmittel wurde im Vakuum entfernt und der Rückstand mit 50 ml Hexan über eine G3-Schlenkfritte filtriert, mit 50 ml Hexan nachgewaschen und getrocknet (0.1 mbar, 20°C). Das Dilithiumsalz wurde bei -78°C zu einer Suspension von 2.2 g (9.5 mmol) Zirkoniumtetrachlorid in 50 ml Methylenchlorid gegeben und im Verlauf von 18 h unter Rühren auf Raumtemperatur erwärmt. Der Ansatz wurde über eine G3-Fritte filtriert und der Rückstand portionsweise mit insgesamt 400 ml Methylenchlorid nachextrahiert. Die vereinigten Filtrate wurden im Vakuum vom Lösungsmittel weitestgehend befreit. Der aus Methylenchlorid ausgefallene, kristalline Niederschlag wurde abgetrennt. Es wurden 3.8 g Metallocen als Gemisch von racemischer und meso-Form im Verhältnis 1:1 erhalten. Nach erneuter Umkristallisation aus Methylenchlorid wurden 1.4 g des racemischen Komplexes in Form gelber Kristalle isoliert.

$^1$H-NMR (300 MHz, $CDCl_3$): 7.62-7.00 (m, 10H), 6.88-6.76 (m, 6H), 2.95 (s, 12H), 2.42 (s, 6H), 1.18 (s, 6H);

Eine Lösung von 1.0 g (1.4 mmol) Dimethylsilandiylbis(2-methyl-4-(4'-N,N-dimethylamino-phenyl)-indenyl)-zirkoniumdichlorid wurde in einem Gemisch aus 15 ml Toluol und 15 ml THF gelöst, mit 7.95 g (5.6 mmol) Methyliodid versetzt und 3 h bei 45°C gerührt. Anschließend wurde die Reakionsmischung zur Trockne eingeengt, der Rückstand mit wenig Toluol und Pentan gewaschen, und man erhielt 1.29 g Dimethylsilandiylbis(2-methyl-4-(4'-trimethyl-ammonium-phenyl)-indenyl)-dichlorozirkonium-diiodid (1) als gelb-orangen Feststoff.

$^1$H-NMR (300 MHz, DMSO-d6): 7.70-7.05 (m, 10H), 6.89-6.79 (m, 6H), 3.51 (s, 18H), 2.49 (s, 6H), 1.21 (s, 6H);

Beispiel 2: Dimethylsilandiylbis(2-methyl-4-(4'-dimethylsulfonium-phenyl)-indenyl)-dichlorozirkonium-dibromid (2)

Die Darstellung von Dimethylsilandiylbis(2-methyl-4-(4'-methylthio-phenyl)-indenyl)-zirkoniumdichlorid erfolgte entsprechend Beispiel 1. Anschließend wurde analog Beispiel 1 mit Methylbromid zu (2) umgesetzt.

Beispiel 3: Dimethylsilandiylbis(2-methyl-4-(3'-diphenylethylphosphonium-phenyl)-indenyl)-dichlorozirkonium-diiodid (3)

Die Darstellung von Dimethylsilandiylbis(2-methyl-4-(3'-diphenylphosphino-phenyl)-indenyl)- zirkoniumdichlorid erfolgte entsprechend Beispiel 1. Anschließend wurde analog Beispiel 1 mit Ethyliodid zu (3) umgesetzt.

Beispiel 4: Dimethylsilandiylbis(2-methyl-4-(4'-dimethylammonium-phenyl)-indeny)-dichlorozirkonium-dichlorid (4)

Die Darstellung von Dimethylsilandiylbis(2-methyl-4-(4'-dimethylamino-phenyl)-indenyl)- zirkoniumdichlorid erfolgte entsprechend Beispiel 1. Anschließend wurde bei 0°C mit zwei Äquivalent Chlorwasserstoff-Lösung in THF zu (4) umgesetzt.

Beispiel 5: Dimethylsilandiylbis(2-methyl-4-(4'-dimethyl(methoxymethyl)ammonium-phenyl)-indenyl)-dichlorozirkonium-dichlorid (5)

Die Darstellung von Dimethylsilandiylbis(2-methyl-4-(4'-dimethyl(methoxymethyl)-ammonium-phenyl)-indenyl)-zirkoniumdichlorid erfolgte entsprechend Beispiel 1. Anschließend wurde analog Beispiel 1 mit Methoxymethylchlorid (MOMCI) zu (5) umgesetzt.

Beispiel 6: 1,2-Ethandiyl-bis(2-methyl-4-(3'-dimethylammonium-phenyl)-indenyl)-dichlorozirkonium-bis-trifluoracetat (6)

Die Darstellung von Dimethylsilandiylbis(2-methyl-4-(3'-dimethylammonium-phenyl)-indenyl)-zirkoniumdichlorid erfolgte entsprechend Beispiel 1 unter Verwendung von 1,2-Dibromethan bei der Ligandsynthese. Anschließend wurde bei 0°C mit zwei Äquivalenten Trifluoressigsäure zu (6) umgesetzt.

Beispiel 7: Dimethylsilandiylbis(2-methyl-4-(4'-dimethyl-(2''-trimethylsilyl-ethoxy-methyl)ammonium-phenyl)-indenyl)-dichlorohafnium-dichlorid (7)

Die Darstellung von Dimethylsilandiylbis(2-methyl-4-(4'-dimethyl-(2''-trimethylsilyl-ethoxy-methyl)ammonium-phenyl)-indenyl)-hafniumdichlorid erfolgte entsprechend Beispiel 1 unter Verwendung von Hafniumtetrachlorid bei der Komplexsynthese. Anschließend wurde analog Beispiel 1 mit 2-Trimethylsilyl-ethoxy-methylchlorid (SEMCI) zu (7) umgesetzt.

Polymerisationsbeispiele

Darstellung des geträgerten Katalysatorsystems

0.092 mmol des entsprechenden Metallocens wurden mit 4,3 ml 30%iger MAO-Lösung (20 mmol) in Toluol und weiteren 1,9 ml Toluol vermischt und lichtgeschützt 1 h bei Raumtemperatur gerührt. Dann wurden 4 g $SiO_2$ unter Rühren zugegeben und der Ansatz nach beendeter Zugabe 10 min nachgerührt. Nach Entfernung des Lösungsmittels im Ölpumpenvakuum wurde ein frei fließendes Pulver erhalten.

Polymerisation

Ein trockener 16-$dm^3$-Reaktor wurde zunächst mit Stickstoff und anschließend mit Propylen gespült und mit 10 $dm^3$ flüssigem Propylen befüllt. Es wurden dann 0,5 $cm^3$ einer 20%igen Triisobutylaluminiumlösung in Varsol verdünnt mit 30 $cm^3$ Exxsol in den Reaktor gegeben und der Ansatz 15 Minuten bei 30°C gerührt. Anschließend wurde die entsprechende Katalysator-Suspension aus 2 g des geträgerten Metallocen-Katalysators in 20 $cm^3$ Exxsol in den Reaktor gegeben. Das Reaktionsgemisch wurde dann auf 60°C aufgeheizt (4°C/min) und das Polymerisationssystem 1 h durch Kühlung auf 60°C gehalten. Die Polymerisation wurde durch Entgasen gestoppt und das erhaltene Polymer im Vakuum getrocknet.

Die Polymerisationsergebnisse sind in nachfolgenden Tabelle zusammengestellt.

| Metallocen | Ausbeute [kg PP] | Aktivität [kg PP/g Kat/h] | Bemerkungen |
|---|---|---|---|
| 1 | 2.0 | 1.0 | keine Belagsbildung Polymerisation verlief heterogen |
| 2 | 1.8 | 0.9 | keine Belagsbildung Polymerisation verlief heterogen |

**Patentansprüche**

**1.** Katalysatorsystem enthaltend

a) mindestens einen Träger,
b) mindestens einen Cokatalysator
c) mindestens ein Metallocen der Formel (I),

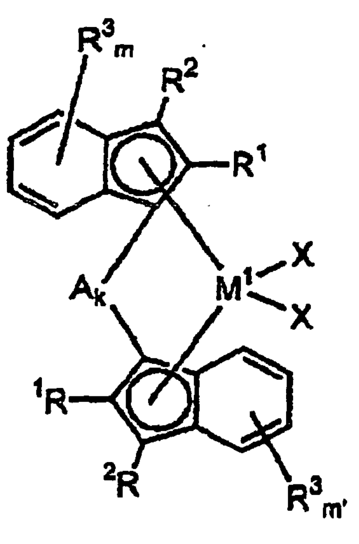

(I)

worin

$M^1$ ein Übergangsmetall der Gruppe 4 des Periodensystems der Elemente ist,

$R^1$ und $R^2$ gleich oder verschieden sind und ein Wasserstoffatom, ein Halogenatom, eine $C_1$-$C_{20}$-kohlenstoffhaltige Gruppe, bedeuten,

$R^3$ gleich oder verschieden, ein Wasserstoffatom, ein Halogenatom oder eine $C_1$-$C_{40}$-kohlenstoffhaltige Gruppe bedeutet, und zwei Reste $R^3$ gegebenenfalls ein mono- oder polycyclisches Ringsystem bilden können, das seinerseits substituiert sein kann, wobei mindestens einer der Reste $R^1$, $R^2$, $R^3$ eine kationische Gruppe $(-DE_L)^+ Y^-$ trägt bzw. ist
worin

D ein Atom der Gruppen 15 oder 16 des Periodensystems der Elemente (PSE),

E gleich oder verschieden ist und ein Wasserstoffatom, eine $C_1$-$C_{20}$-kohlenstoffhaltige Gruppe, bedeutet, und zwel Reste E gegebenenfalls ein mono- oder polycyclisches Ringsystem bilden können, das seinerseits substituiert sein kann,

L gleich 3 ist, wenn D ein Atom der Gruppe 15 des Periodensystems der Elemente ist, und gleich 2 ist wenn D ein Atom der Gruppe 16 des Periodensystems der Elemente ist,

Y Halogen, $C_1$-$C_{10}$-Alkylsulfonat, $C_1$-$C_{10}$-Halogen-alkylsulfonat, $C_6$-$C_{20}$-Arylsulfonat, $C_6$-$C_{20}$-Halogen-arylsulfonat, $C_7$-$C_{20}$-Alkyl-arylsulfonat, $C_1$-$C_{20}$-Halogen-alkylcarboxylat, $C_1$-$C_{10}$-Alkylsulfat, Tetrafluorborat, Hexafluorphosphat, Hexafluorantimonat oder Hexafluorarsenat bedeutet,

m eine ganze Zahl, kleiner gleich 4 und größer gleich 1 ist,

m' eine ganze Zahl, kleiner gleich 4 und größer gleich 1, ist,

k gleich Null oder 1 ist, wobei für k = 0 ein unverbrücktes Metallocen, für k = 1 ein verbrücktes Metallocen vorliegt,

A eine Verbrückung der Formel

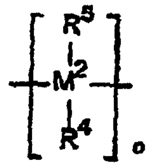

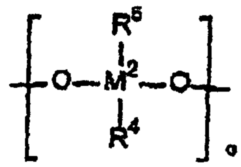

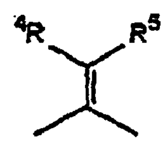

oder $=BR^4$, $AlR^4$, -S-, -SO-, $-SO_2-$, $=NR^4$, $=PR^4$, $=P(O)R^4$, o-Phenylen, 2,2'-Biphenylen, wobei

$M^2$ Kohlenstoff, Silizium, Germanium, Zinn, Stickstoff oder Phosphor ist.

o gleich 1,2,3 oder 4 ist,

$R^4$ und $R^5$ unabhängig voneinander gleich oder verschieden ein Wasserstoffatom, Halogen oder eine $C_1$-$C_{20}$-kohlenstoffhaltige Gruppe bedeuten und $R^4$ und $R^5$ gegebenenfalls ein mono- oder polycyclisches Ringsystem bilden können, und

die Reste X sind gleich oder verschieden und bedeuten ein Wasserstoffatom, ein Halogenatom wie Fluor, Chlor, Brom oder lod, eine Hydroxylgruppe, eine $C_1$-$C_{10}$-Alkylgruppe, eine $C_6$-$C_{15}$-Arylgruppe, eine $C_1$-$C_{10}$-Alkoxygruppe, eine $C_6$-$C_{15}$-Aryloxygruppe, eine Benzylgruppe.

**2.** Katalysatorsystem nach Anspruch 1, **dadurch gekennzeichnet, daß** in Formel (I),

$M^1$ Titan, Zirkonium oder Hafnlum,

$R^1$ und $R^2$ gleich oder verschieden sind und ein Wasserstoffatom, eine $C_1$-$C_{20}$-Alkylgruppe, eine $C_6$-$C_{14}$-Arylgruppe, eine $C_2$-$C_{20}$-Alkenylgruppe, eine $C_2$-$C_{20}$-Alkinylgruppe, eine $C_7$-$C_{20}$-Alkyl-Arylgruppe, die gegebenenfalls ein oder mehrfach, gleich oder verschieden durch Halogen substituiert sein können, ein Halogenatom, eine $-SIMe_3$-Gruppe, eine $OSiMe_3$-Grupppe, bedeuten,

$R^3$ gleich oder verschleden, ein Wasserstoffatom, eine $C_1$-$C_{20}$-Alkylgruppe, die gegebenenfalls substituiert sein kann, eine $C_6$-$C_{14}$-Arylgruppe, die gegebenenfalls substituiert sein kann, eine $C_2$-$C_{20}$-Alkenylgruppe, eine $C_2$-$C_{20}$-Alkinylgruppe, eine $C_7$-$C_{20}$-Alkyl-Arylgruppe, ein Halogenatom, eine $SiMe_3$-Gruppe, eine $OSiMe_3$-Grupppe, eine $C_1$-$C_{20}$-heterocyclische Gruppe, die gegebenenfalls substituiert sein können, wobei der Begriff Heteroatom sämtliche Elemente mit Ausnahme von Kohlenstoff und Wasserstoff umfaßt und bevorzugt Atome der Gruppen 14, 15 oder 16 des Periodensystems der Elemente bedeutet, und zwei Reste $R^3$ gegebenenfalls ein mono- oder polycyclisches Ringsystem bilden können, das seinerseits substituiert sein kann, wobei mindestens einer der Reste

$R^1$, $R^2$, $R^3$ eine kationische Gruppe $(-DE_L)^+$ $Y^-$ trägt bzw. ist

worin

D Stickstoff, Phosphor, Sauerstoff oder Schwefel,

E gleich oder verschieden Ist und ein Wasserstoffatom, eine $C_1$-$C_{20}$-Alkylgruppe, eine $C_6$-$C_{14}$-Arylgruppe, eine $C_2$-$C_{20}$-Alkenylgruppe, eine $C_2$-$C_{20}$-Alkinylgruppe, eine $C_7$-$C_{20}$-Alkyl-Arylgruppe, eine Trialkylsilyl-Gruppe, eine Triarylsilyl-Gruppe, eine Alkylarylsilyl-Gruppe, die gegebenenfalls substituiert sein können, bedeutet, und zwel Reste E gegebenenfalls ein mono- oder polycyclisches Ringsystem bilden können, das seinerseits substituiert sein kann,

L gleich 3 ist, wenn D ein Atom der Gruppe 15 des Periodensystems der Elemente ist, und gleich 2 ist wenn D ein Atom der Gruppe 16 des Periodensystems der Elemente ist,

Y Chlorid, Bromid, lodid, Triflat, Mesylat Tosylat, Benzolsulfonat, Trifluoracetat, Methylsulfat, Tetrafluorborat oder Hexafluorphosphat, bedeutet,

m 1 oder 2 ist,

m' 1 oder 2 ist,,

k gleich Null oder 1 ist, wobei für k = 0 ein unverbrücktes Metallocen, für k = 1 ein verbrücktes Metallocen vorllegt,

A eine Verbrückung der Formel

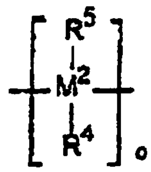 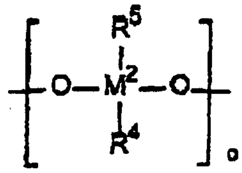 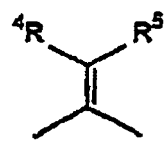

oder $=BR^4$, $AIR^4$, -S-, -SO-, $-SO_2-$, $=NR^4$, $=PR^4$, $=P(O)R^4$, o-Phenylen, 2,2'-Biphenylen, wobei

$M^2$ Kohlenstoff, Silizium oder Germanlum,

o gleich 1 oder 2 ist,

$R^4$ und $R^6$ unabhängig voneinander gleich oder verschieden ein Wasserstoffatom, Halogen, ein $(C_1$-$C_{20})$Alkyl, ein $(C_6$-$C_{14})$Aryl, ein $(C_1$-$C_{10})$Alkoxy, ein $(C_2$-$C_{20})$Alkenyl, ein $(C_7$-$C_{20})$Arylalkyl, ein $(C_7$-$C_{20})$Alkylaryl, ein $(C_6$-$C_{10})$Aryloxy, ein $(C_1$-$C_{10})$Fluoralkyl, ein $(C_6$-$C_{10})$Halogenaryl, ein $(C_2$-$C_{10})$Alkinyl, ein $C_3$-$C_{20}$-Alkylsilyl-, ein $C_3$-$C_{20}$-Arylsilyl- oder ein $C_3$-$C_{20}$-Alkylarylsilyl-, bedeuten und $R^4$ und $R^5$ gegebenenfalls ein mono- oder polycyclisches Ringsystem bilden können.

3. Katalysatorsystem nach Anspruch 1, **dadurch gekennzeichnet, daß** in Formel (I).

$M^1$ Zirkonium,

$R^1$ und $R^2$ gleich oder verschieden sind und ein Wasserstoffatom, Methyl, Ethyl, n-Propyl, iso-Propyl, n-Butyl, sec-Butyl, iso-Butyl, tert.-Butyl, n-Pentyl, verzweigtes Pentyl, n-Hexyl, verzweigtes Hexyl, Cyclohexyl, Benzyl, bedeuten,

$R^3$ gleich oder verschieden, ein Wasserstoffatom, Methyl, Ethyl, Trifluorethyl, n-Propyl, iso-Propyl, n-Butyl, sec-Butyl, iso-Butyl, tart.-Butyl, Pentyl, Hexyl, Octyl, Cyclopropyl, Cyclopenty, Cyclohexyl, Phenyl, Tolyl, Xylyl, tert.-Butyl-phenyl, Ethylphenyl, Trifluormethylphenyl, Bis(trifluormethyl)phenyl, Methoxyphenyl, Fluorphenyl, Dimethylaminophenyl, Trimethyllammoniumpheny-iodid, Dimethylsulfoniumphenyl-bromid, Triethylphosphonium-phenyl-Triflat, Naphthyl, Acenaphthyl, Phenanthrenyl, Anthracenyl, eine $C_1$-$C_{20}$-heterocyclische Gruppe, die gegebenenfalls substituiert sein können, wobei der Begriff Heteroatom sämtliche Elemente mit Ausnahme von Kohlenstoff und Wasserstoff umfaßt und bevorzugt Atome der Gruppen 14, 15 oder 16 des Periodensystems der Elemente bedeutet, und zwei Reste $R^3$ gegebenenfalls ein mono- oder polycyclisches Ringsystem bilden können, das seinerseits substituiert sein kann, wobei mindestens einer der Reste $R^1$, $R^2$, $R^3$ eine kationische Gruppe $(-DE_L)^+$ $Y^-$ trägt bzw. ist

worin

D Stickstoff, Phosphor oder Schwefel,

E — gleich oder verschleden ist und ein Wasserstoffatom, Methyl, Ethyl, Propyl, Butyl, Allyl, Benzyl, Methoxymethyl, Benzyloxymethyl, 2-Methoxy-ethoxy-methyl, 2-Trimethylsilyl-ethoxy-methyl, Trimethylsilyl,

L — gleich 3 ist, wenn D ein Atom der Gruppe 15 des Periodensystems der Eiemente ist, und gleich 2 ist wenn D ein Atom der Gruppe 16 des Periodensystems der Elemente ist,

Y — Chlorid, Bromid, lodid, Triflat, Mesylat, Tosylat, Benzolsulfonat, Trifluoracetat, Methylsulfat, Tetrafluorborat oder Hexafluorphosphat, bedeutet,

m — gleich 1 ist,

m' — gleich 1 ist,

k — gleich Null oder 1 ist, wobei für k = 0 ein unverbrücktes Metallocen, für k = 1 ein verbrücktes Metallocen vorliegt,

A — eine Verbrückung der Formel

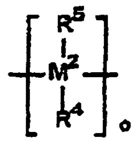 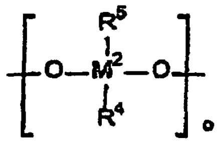 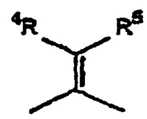

oder $=BR^4$, $AlR^4$, -S-, -SO-, $-SO_2-$, $=NR^4$, $=PR^4$, $=P(O)R^4$, o-Phenylen, 2,2'-Biphenylen, wobei

$M^2$ — Kohlenstoff oder Silizium,

o — gleich 1 oder 2,

$R^4$ und $R^5$ — unabhängig voneinander gleich oder verschieden ein Wasserstoffatom, Halogen, Methyl, Phenyl- oder Naphthyl, Trimethylsilyl, Triethylsilyl, tert.-Butyldimethylsllyl, Triphenylsilyl, Dimethylphenylsilyl, Diphenylsilyl oder Diphenyl-tert.-butylsilyl bedeuten und $R^4$ und $R^5$ gegebenenfalls ein mono- oder polycyclisches Ringsystem bilden können,

4. Katalysatorsystem nach Anspruch 1, **dadurch gekennzeichnet, daß** in Formel (I) A gleich Dimethylsilandiyl, Dimethylgermandiyl, Ethyliden, Methylethyliden, 1,1-Dimethylethyliden, 1,2-Dimethylethyliden, Tetramethylethyliden, Isopropyliden, Phenylmethylmethyliden oder Diphenylmethyliden ist.

5. Katalysatorsystem nach Anspruch 1, **dadurch gekennzeichnet, daß** das Metallocen durch die Formel (I*).

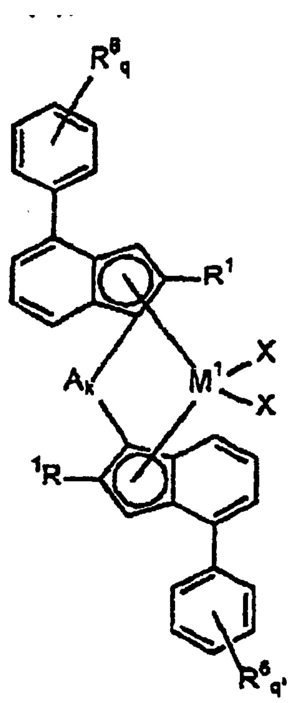

(I*)

worin

$M^1$, A, $R^1$, k und X wie in Formel (I) definiert sind und

$R^6$ gleich oder verschieden, ein Wasserstoffatom, eine $C_1$-$C_{20}$-Alkylgruppe, die gegebenenfalls substituiert sein kann, eine $C_6$-$C_{14}$-Arylgruppe, die gegebenenfalls substituiert sein kann, eine $C_2$-$C_{20}$-Alkinylgruppe, eine $C_7$-$C_{20}$-Alkyl-Arylgruppe, Halogen, eine $OR^4$-Gruppe, eine $SIR^4_3$-Gruppe, eine $NR^4_2$-Gruppe, eine $SR^4$-Gruppe, und zwei Reste $R^4$ und $R^6$, jeweils oder miteinander, ein mono- oder polycyclisches Ringsystem bilden können, das seinerseits substituiert sein kann, wobei $R^4$ wie in Formel (I) definiert ist, und mindestens einer der Reste $R^6$ eine kationische Gruppe $(-DE_L)^+ Y^-$ trägt, worin D, E, L und Y wie in Formel (I) definiert sind,

q ist eine ganze Zahl, kleiner gleich 5 und größer gleich 1, ist,

q' ist eine ganze Zahl, kleiner gleich 5 und größer gleich 1, ist, beschrieben wird.

**6.** Katalysatorsystem nach Anspruch 5, **dadurch gekennzeichnet, daß** in Formel (I*),

$R^6$ gleich oder verschieden, ein Wasserstoffatom, Methyl, Ethyl, Trifluormethyl, Trifluorethyl, n-Propyl, iso-Propyl, n-Butyl, sec-Butyl, iso-Butyl, tert.-Butyl, Pentyl, Hexyl, Octyl, Cyclopropyl, Cyclopenty, Cyclohexyl, Phenyl, und mindestens einer der Reste $R^8$ eine kationische Gruppe $(-DE_L)^+ Y^-$ trägt, worin D, E, L und Y wie in Formel (I) definiert sind,

q 1 oder 2 ist,

q' 1 oder 2 ist.

**7.** Katalysatorsystem nach Anspruch 1, **dadurch gekennzeichnet, daß** in Formel (I) für

Dimethylsilandiylbis(2-methyl-4-(4'-trimethylammonium-phenyl)-indeny)l-dichlorozirkonium-diiodid,
Dimethylsilandiylbis(2-methyl-4-(4'-trimethylammonium-phenyl)-indeny)l-dichlorotitan-dliodid,
Dimethylsilandiylbis(2-methyl-4-(4'-trimethylammonium-phenyl)-indeny)l-dichlorohafnium-diiodid,
Dimethylsilandiylbis(2-methyl-4-(3'-trimethylammonium-phenyl)-indenyl)-dichlorozirkonium-diiodid,
Dimethylsilandiylbis(2-methyl-4-(2'-trimethylammonium-phenyl)-indenyl)-dichlorozirkonium-diiodid,
Dimethylsilandiylbis(2-methyl-4-(3',5'-bis(trimethylammonium)-phenyl)-indenyl)-dichlorozirkonium-tetraiodid,
Dimethylsilandiylbis(2-methyl-4-(4'-trimethylammonium-naphthyl)-indenyl)l-dichlorozirkonium-diiodid,
Dimethylsilandiylbis(2-methyl-4-(4'-trimethylammonium-phenyl)-indeny)l-dichlorozirkonium-ditosylat,
Dimethylsilandiylbis(2-ethyl-4-(4'-trimethylammonium-phenyl)-indenyl)-dichlorozirkonium-ditriflat,
Dimethylsilandiylbis(2-methyl-4-(4'-dimethylammonium-phenyl)-indenyl)-dichlorozirkonium-dichlorid.
Dimethylsilandiylbis(2-methyl-4-(4'-trimethylammonium-phenyl)-indeny)l-dichlorozirkonium-bis-tetrafluorborat,
Dimethylsilandiylbis(2-methyl-4-(4'-N-methyl-N-pyrrolidino-phenyl)-indeny)l-dichlorozirkonium-dilodid,
Dimethylsilandiylbis(2-methyl-4-(4'-dimethylammonium-phenyl)-indenyl)-dichlorotitan-dichlorid,
Dimethylsilandiylbis(2-methyl-4-(4'-dimethyl(methoxymethyl)ammonium-phenyl)-indenyl)-dichlorozirkonium-dichlorid,
Dimethylsilandiylbis(2-methyl-4-(4'-dimethyl(2"-methoxy-ethoxy-methyl)ammonium-phenyl)-indenyl)-dichlorozirkonium-dichlorid,
Dimethylsilandiylbis(2-methyl-4-(4'-dimethyl(benzyloxymethyl)ammonium-phenyl)-indenyl)-dichlorozirkonium-dichlorid,
Dimethylsilandiylbis(2-methyl-4-(4'-dimethyl-(2"-trimethylsilyl-ethoxy-methyl)ammonium-phenyl)-indenyl)-dichlorohafnium-dichlorid,
Dimethylsilandiylbis(2-methyl-4-(4'-dimethylbenzylammonium-phenyl)-indenyl)-dichlorozirkonium-dichlorid,
Dimethylsilandiylbis(2-methyl-4-(4'-dimethylallylammonium-phenyl)-indenyl)-dichlorozirkonium-diiodid,
Dimethylsilandiylbis(2-methyl-4-(4'-triethylammonium-phenyl)-indenyl)-dichlorozirkonium-diiodid,
Dimethylsilandiylbis(2-ethyl-4-(4'-dimethyl-(2"-trimethylsllyl-ethoxy-methyl)ammonium-phenyl)-indenyl)-dichlorohafnium-dichlorid,
Dimethylsilandiylbis(2-ethyl-4-(4'-dimethylbenzylammonium-phenyl)-indenyl)-dichlorozirkonium-dichlorid,
Dimethylsilandiylbis(2-ethyl-4-(4'-dimethylallylammonium-phenyl)-indenyl)-dichlorozirkonium-diiodid,
Dimethylsilandiylbis(2-ethyl-4-(4'-trimethylammonium-phenyl)-indenyl)-dichlorozirkonium-diiodid,
Dimethylsilandiylbis(2-n-butyl-4-(4'-trimethylammonium-phenyl)indenyl)-dichlorozirkonium-diiodid,
Dimethylsilandiylbis(2-isopropyl-4-(4'-triethylammonium-phenyl)-indenyl)-dichlorozirkonium-dibromid,
Dimethylsilandiylbis(2-iso-butyl-4-(4'-triethylammonium-phenyl)-indenyl)-dichlorozirkonium-ditriflat,

Dimethylsilandiylbis(2-ethyl-4-(4'-triethylphosphomium-phenyl)-indenyl)-dichlorozirkonium-diiodid,
Dimethylsilandiylbis(2-methyl-4-(4'-dimethylsulfonium-phenyl)-indenyl)-dichlorozirkonium-dibromid,
Dimethylsilandiylbis(2-ethyl-4-(4'-dimethylsulfonium-phenyl)-indenyl)-dichlorozirkonium-dibromid,
Dimethylsilandiylbis(2-methyl-4-(3'-dimethylsulfonium-phenyl)-indenyl)-dichlorozirkonium-dibromid,
Dimethylsilandiylbis(2-methyl-4-(2'-dimethylsulfonium-phenyl)-indenyl)-dichlorozirkonium-dibromid,
Dimethylsilandiylbis(2-methyl-4-(3',5'-Bis(dimethylsulfonium)-phenyl)-indenyl)-dichlorozirkonium-tetrabromid,
Dimethylsilandiylbis(2-methyl-4-(4'-dibenzylsulfonium-phenyl)-indenyl)-dichlorozirkonium-dibromid,
Dimethylsilandiylbis(2-methyl-4-(4'-methyl(methoxymethyl)sulfonium-phenyl)-indenyl)-dichlorozirkonium-dichlorid,
Dimethylsilandiylbis (2-methyl-4-(4'-diallylsulfonium-phenyl)-indenyl)-dichlorozirkonium-dibromid,
Dimethylsilandiylbis(2-methyl-4-(3'-diphenylethylphosphonium-phenyl)-indenyl)-dichlorozirkonium-diiodid,
Dimethylsilandiyibis(2-methyl-4-(3'-trimethylphosphonium-phenyl)-indenyl)-dichlorozirkonium-ditriflat,
Methylphenylsilandiylbis(2-iso-butyl-4-(4'-triethylammonium-phenyl)-indenyl)-dichlorozirkonium-ditosylat,
1,2-Ethandiyl-bis(2-methyl-4-(3'-dimethylammonium-phenyl)-indenyl)-dichlorozirkonium-bis-trifluoracetat,
1,2-Ethandiyl-bis(2-methyl-4-(4'-dimethylsulfonium-phenyl)-indenyl)-dichlorozirkonium-dibromid,
1,2-Ethandiyl-bis(2-methyl-4-(3'-diphenylethylphosphonium-phenyl)-indenyl)-dichlorozirkonium-diiodid,
Dimethylsilandiylbis(2-methyl-5-trimethylammonium-indenyl)-dichlorozirkonium-dichlorid,
Dimethylsilandiylbis(2-methyl-5-trimethylphosphonium-indenyl)-dichlorozirkonium-dichlorid,
1,2-Ethandiylbis(2-methyl-4-dimethylbenzylammonium-indenyl)-dichlorozirkonium-dibromid,
1,2-Ethandiylbis(2-methyl-4-phenyl-5-dimethylbenzylammonium-indenyl)-dichlorozirkonium-dibromid,
Dimethylsilandiylbis(2-methyl-4-phenyl-6-trimethylammonium-indenyl)-dichlorozirkonium-dichlorid,
Dimethylsilandiylbis(2-methyl-5-dimethylsulfonium-indenyl)-dichlorozirkonium-dibromid,
Dimethylsilandiylbis(2-methyl-4-(4'-(2''-trimethylammonium-ethyl)-phenyl-indenyl)-dichlorozirkonium-dichlorid,
Dimethylsilandiylbis(2-methyl-4-(4'-(3''-dimethylsulfonium-propyl)-phenyl-indenyl)-dichlorozirkonium-diiodid,
Dimethylsilandiylbis(2-methyl-4-(3'-(2''-trimethylammonium-ethyl)-phenyl-indenyl)-dichlorozirkonium-dichlorid,
Dimethylsilandiylbis(2-methyl-4--(2'-trimethylammonium-ethyl)-indenyl)-dichlorozirkonium-dichlorid,
Dimethylsilandiylbis(2-(2'-trimethylammonium-ethyl)-indenyl)-dichlorozirkonium-dichlorid,
Dimethylsilandiylbis(2-(2'-trimethylammonium-ethyl)-4-phenyl-indenyl)-dichlorozirkonium-dibromid,
Dimethylsilandiylbis(2-(2'-dimethylsulfonium-ethyl)-4,6-dimethyl-indenyl)-dichlorozirkonium-diiodid oder ein Gemisch derselben steht.

**8.** Verfahren zur Herstellung eines Polyolefins durch Polymerisation eines oder mehrer Olefine In Gegenwart eines Katalysatorsystems nach einem der Ansprüche 1 bis 7.

**9.** Verwendung eines Katalysatorsystems nach einem der Ansprüche 1 bis 7 zur Herstellung von Polyolefinen.

## Claims

**1.** A catalyst system comprising

a) at least one support
b) at least one cocatalyst and
c) at least one metallocene of the formula (I)

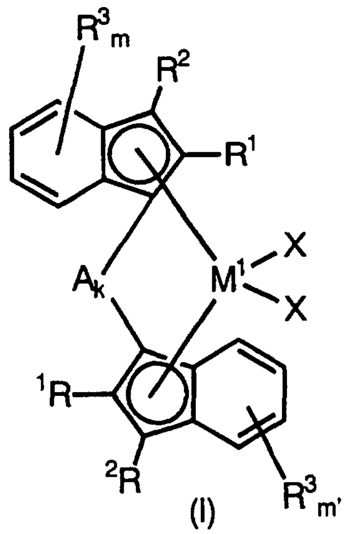

(I)

where

| | |
|---|---|
| $M^1$ | is a transition metal of Group 4 of the Periodic Table of the Elements, |
| $R^1$ and $R^2$ | are identical or different and are each a hydrogen atom, a halogen atom or a $C_1$-$C_{20}$ group, |
| $R^3$ | are identical or different and are each a hydrogen atom, a halogen atom or a $C_1$-$C_{40}$ group, and two radicals $R^3$ may form a monocyclic or polycyclic ring system which may in turn be substituted, where at least one of the radicals $R^1$, $R^2$, $R^3$ bears or is a cationic group $(-DE_L)^+ Y^-$, |

where

D is an atom of group 15 or 16 of the Periodic Table of the Elements,

E are identical or different and are each a hydrogen atom or a $C_1$-$C_{20}$ group, and two radicals E may form a monocyclic or polycyclic ring system which may in turn be substituted,

L is 3 when D is an atom of group 15 of the Periodic Table of the Elements and is 2 when D is an atom of group 16 of the Periodic Table of the Elements,

Y is halogen, $C_1$-$C_{10}$-alkylsulfonate, $C_1$-$C_{10}$-haloalkylsulfonate, $C_6$-$C_{20}$-arylsulfonate, $C_6$-$C_{20}$-haloarylsulfonate, $C_7$-$C_{20}$-alkylarylsulfonate, $C_1$-$C_{20}$-haloalkylcarboxylate, $C_1$-$C_{10}$-alkylsulfate, tetrafluoroborate, hexafluorophosphate, hexafluoroantimonate or hexafluoroarsenate,

m is an integer less than or equal to 4 and greater than or equal to 1,

m' is an integer less than or equal to 4 and greater than or equal to 1,

k is zero or 1, with the metallocene being unbridged when k = 0 and the metallocene being bridged when k = 1,

A is a bridge of the formula

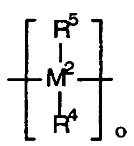

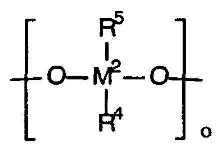

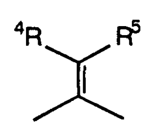

or $=BR^4$, $AlR^4$, -S-, -SO-, $-SO_2-$, $=NR^4$, $=PR^4$, $=P(O)R^4$, o-phenylene or 2,2'-biphenylene, where

$M^2$ is carbon, silicon, germanium, tin, nitrogen or phosphorus,

o is 1, 2, 3 or 4,

$R^4$ and $R^5$ are identical or different and are each, independently of one another, a hydrogen atom, halogen or a $C_1$-$C_{20}$ group and $R^4$ and $R^5$ may form a monocyclic or polycyclic ring system, and the radicals X are identical or different and are each a hydrogen atom, a halogen atom such as fluorine, chlorine, bromine or iodine, a hydroxyl group, a $C_1$-$C_{10}$-alkyl group, a $C_6$-$C_{15}$-aryl group, a $C_1$-$C_{10}$-alkoxy group, a $C_6$-$C_{15}$-aryloxy group or a benzyl group.

**2.** A catalyst system as claimed in claim 1, wherein, in formula (I),

$M^1$ is titanium, zirconium or hafnium,

$R^1$ and $R^2$ are identical or different and are each a hydrogen atom, a $C_1$-$C_{20}$-alkyl group, a $C_6$-$C_{14}$-aryl group, a $C_2$-$C_{20}$-alkenyl group, a $C_2$-$C_{20}$-alkynyl group, a $C_7$-$C_{20}$-alkylaryl group, each of which may bear one or more, identical or different halogen atoms as substituents, a halogen atom, an $-SiMe_3$ group or an $OSiMe_3$ group,

$R^3$ are identical or different and are each a hydrogen atom, a $C_1$-$C_{20}$-alkyl group which may be substituted, a $C_6$-$C_{14}$-aryl group which may be substituted, a $C_2$-$C_{20}$-alkenyl group, a $C_2$-$C_{20}$-alkynyl group, a $C_7$-$C_{20}$-alkylaryl group, a halogen atom, an $SiMe_3$ group, an $OSiMe_3$ group or a $C_1$-$C_{20}$-heterocyclic group which may be substituted, where the term heteroatom encompasses all elements with the exception of carbon and hydrogen and preferably refers to an atom of group 14, 15 or 16 of the Periodic Table of the Elements, and two radicals $R^3$ may form a monocyclic or polycyclic ring system which may in turn be substituted, where at least one of the radicals $R^1$, $R^2$, $R^3$ bears or is a cationic group $(-DE_L)^+ Y^-$,

where

D is nitrogen, phosphorus, oxygen or sulfur,

E are identical or different and are each a hydrogen atom, a $C_1$-$C_{20}$-alkyl group, a $C_6$-$C_{14}$-aryl group, a $C_2$-$C_{20}$-alkenyl group, a $C_2$-$C_{20}$-alkynyl group, a $C_7$-$C_{20}$-alkylaryl group, a trialkylsilyl group, a triarylsilyl group or an alkylarylsilyl group, which may in turn be substituted, and two radicals E may form a monocyclic or polycyclic ring system which may in turn be substituted,

L is 3 when D is an atom of group 15 of the Periodic Table of the Elements and is 2 when D is an atom of group 16 of the Periodic Table of the Elements,

Y is chloride, bromide, iodide, triflate, mesylate, tosylate, benzenesulfonate, trifluoroacetate, methyl sulfate, tetrafluoroborate or hexafluorophosphate,

m is 1 or 2,

m' is 1 or 2,

k is zero or 1, where the metallocene is unbridged when k = 0 and the metallocene is bridged when k = 1,

A is a bridge of the formula

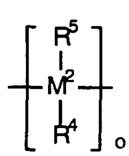
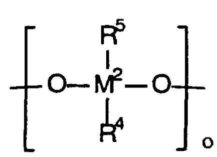
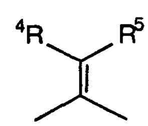

or $=BR^4$, $AlR^4$, -S-, -SO-, $-SO_2-$, $=NR^4$, $=PR^4$, $=P(O)R^4$, o-phenylene, 2,2'-biphenylene, where

$M^2$ is carbon, silicon or germanium,

o is 1 or 2,

$R^4$ and $R^5$ are identical or different and are each, independently of one another, a hydrogen atom, halogen, a $C_1$-$C_{20}$-alkyl, a $C_6$-$C_{14}$-aryl, a $C_1$-$C_{10}$-alkoxy, a $C_2$-$C_{20}$-alkenyl, a $C_7$-$C_{20}$-arylalkyl, a $C_7$-$C_{20}$-alkylaryl, a $C_6$-$C_{10}$-aryloxy, a $C_1$-$C_{10}$-fluoroalkyl, a $C_6$-$C_{10}$-haloaryl, a $C_2$-$C_{10}$-alkynyl, a $C_3$-$C_{20}$-alkylsilyl, a $C_3$-$C_{20}$-arylsilyl or a $C_3$-$C_{20}$-alkylarylsilyl, and $R^4$ and $R^5$ may form a monocyclic or polycyclic ring system.

**3.** A catalyst system as claimed in claim 1, wherein, in formula (I),

$M^1$ is zirconium,

$R^1$ and $R^2$ are identical or different and are each a hydrogen atom, methyl, ethyl, n-propyl, isopropyl, n-butyl, sec-butyl, isobutyl, tert-butyl, n-pentyl, branched pentyl, n-hexyl, branched hexyl, cyclohexyl or benzyl,

$R^3$ are identical or different and are each a hydrogen atom, methyl, ethyl, trifluoroethyl, n-propyl, isopropyl, n-butyl, sec-butyl, isobutyl, tert-butyl, pentyl, hexyl, octyl, cyclopropyl, cyclopentyl, cyclohexyl, phenyl, tolyl, xylyl, tert-butylphenyl, ethylphenyl, trifluoromethylphenyl, bis(trifluoromethyl)phenyl, methoxyphenyl, fluorophenyl, dimethylaminophenyl, trimethylammoniumphenyl iodide, dimethylsulfoniumphenyl bromide, triethylphosphoniumphenyl triflate, naphthyl, acenaphthyl, phenanthrenyl, anthracenyl or a $C_1$-$C_{20}$-heterocyclic group which may be substituted, where the term heteroatom encompasses all elements with the exception of carbon and hydrogen and preferably refers to an atom of group 14, 15 or 16 of the Periodic Table of the Elements, and two radicals $R^3$ may form a monocyclic or polycyclic ring system which may in turn be substituted, where at least one of the radicals $R^1$, $R^2$, $R^3$ bears or is a cationic group $(-DE_L)^+ Y^-$,

where

D is nitrogen, phosphorus or sulfur,

E are identical or different and are each a hydrogen atom, methyl, ethyl, propyl, butyl, allyl, benzyl, methoxymethyl, benzyloxymethyl, 2-methoxyethoxymethyl, 2-trimethylsilylethoxymethyl or trimethylsilyl,

L is 3 when D is an atom of group 15 of the Periodic Table of the Elements and is 2 when D is an atom of group 16 of the Periodic Table of the Elements,

Y is chloride, bromide, iodide, triflate, mesylate, tosylate, benzenesulfonate, trifluoroacetate, methyl sulfate, tetrafluoroborate or hexafluorophosphate,

m is 1,

m' is 1,

k is zero or 1, where the metallocene is unbridged when k = 0 and the metallocene is bridged when k = 1,

A is a bridge of the formula

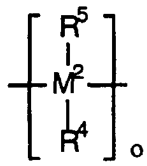

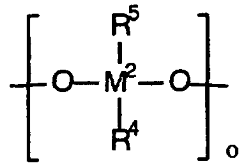

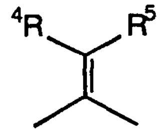

or $=BR^4$, $AlR^4$, -S-, -SO-, $-SO_2-$, $=NR^4$, $=PR^4$, $=P(O)R^4$, o-phenylene or 2,2'-biphenylene, where

$M^2$ is carbon or silicon,

o is 1 or 2,

$R^4$ and $R^5$ are identical or different and are each, independently of one another, a hydrogen atom, halogen, methyl, phenyl or naphthyl, trimethylsilyl, triethylsilyl, tert-butyldimethylsilyl, triphenylsilyl, dimethylphenylsilyl, diphenylsilyl or diphenyl-tert-butylsilyl, and $R^4$ and $R^5$ may form a monocyclic or polycyclic ring system.

**4.** A catalyst system as claimed in claim 1, wherein, in formula (I), A is dimethylsilanediyl, dimethylgermanediyl, ethylidene, methylethylidene, 1,1-dimethylethylidene, 1,2-dimethylethylidene, tetramethylethylidene, isopropylidene, phenylmethylmethylidene or diphenylmethylidene.

**5.** A catalyst system as claimed in claim 1, wherein the metallocene has the formula (I*),

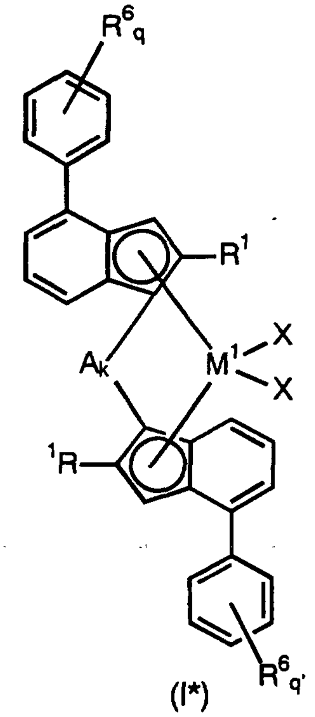

(I*)

where

$M^1$, A, $R^1$, k and X are as defined for formula (I) and
$R^6$ are identical or different and are each a hydrogen atom, a $C_1$-$C_{20}$-alkyl group which may be substituted, a $C_6$-$C_{14}$-aryl group which may be substituted, a $C_2$-$C_{20}$-alkynyl group, a $C_7$-$C_{20}$-alkylaryl group, halogen, an $OR^4$ group, an $SiR^4_3$ group, an $NR^4_2$ group or an $SR^4$ group, and two radicals $R^4$ and $R^6$, each or together, may form a monocyclic or polycyclic ring system which may in turn be substituted, where $R^4$ is as defined for formula (I), and at least

one of the radicals $R^6$ bears a cationic group $(-DE_L)^+ Y^-$, where D, E, L and Y are as defined for formula (I),

q is an integer less than or equal to 5 and greater than or equal to 1,

q' is an integer less than or equal to 5 and greater than or equal to 1.

**6.** A catalyst system as claimed in claim 5, wherein, in formula (I*),

R6 are identical or different and are each a hydrogen atom, methyl, ethyl, trifluoromethyl, trifluoroethyl, n-propyl, isopropyl, n-butyl, sec-butyl, isobutyl, tert-butyl, pentyl, hexyl, octyl, cyclopropyl, cyclopentyl, cyclohexyl or phenyl, and at least one of the radicals $R^6$ bears a cationic group $(-DE_L)^+ Y^-$, where D, E, L and Y are as defined for formula (I),

q is 1 or 2,

q' is 1 or 2.

**7.** A catalyst system as claimed in claim 1, wherein formula (I) represents

dimethylsilanediylbis(2-methyl-4-(4'-trimethylammoniumphenyl)indenyl)dichlorozirconium diiodide

dimethylsilanediylbis(2-methyl-4-(4'-trimethylammoniumphenyl)indenyl)dichlorotitanium diiodide

dimethylsilanediylbis(2-methyl-4-(4'-trimethylammoniumphenyl)indenyl)dichlorohafnium diiodide

dimethylsilanediylbis(2-methyl-4-(3'-trimethylammoniumphenyl)indenyl)dichlorozirconium diiodide

dimethylsilanediylbis(2-methyl-4-(2'-trimethylammoniumphenyl)indenyl)dichlorozirconium diiodide

dimethylsilanediylbis(2-methyl-4-(3',5'-bis(trimethylammonium)phenyl)indenyl)-dichlorozirconium tetraiodide

dimethylsilanediylbis(2-methyl-4-(4'-trimethylammoniumnaphthyl)indenyl)dichloro zirconium diiodide

dimethylsilanediylbis(2-methyl-4-(4'-trimethylammoniumphenyl)indenyl)dichlorozirconium ditosylate

dimethylsilanediylbis(2-ethyl-4-(4'-trimethylammoniumphenyl)indenyl)dichlorozirconium ditriflate

dimethylsilanediylbis(2-methyl-4-(4'-dimethylammoniumphenyl)indenyl)dichlorozirconium dichloride

dimethylsilanediylbis(2-methyl-4-(4'-trimethylammoniumphenyl)indenyl)dichlorozirconium bistetrafluoroborate

dimethylsilanediylbis(2-methyl-4-(4'-N-methyl-N-pyrrolidinophenyl)indenyl)-dichlorozirconium diiodide

dimethylsilanediylbis(2-methyl-4-(4'-dimethylammoniumphenyl)indenyl)dichlorotitanium dichloride

dimethylsilanediylbis(2-methyl-4-(4'-dimethyl(methoxymethyl)ammoniumphenyl)-indenyl)dichlorozirconium dichloride

dimethylsilanediylbis(2-methyl-4-(4'-dimethyl(2"-methoxyethoxymethyl)ammonium phenyl)indenyl)dichlorozirconium dichloride

dimethylsilanediylbis(2-methyl-4-(4'-dimethyl(benzyloxymethyl)ammoniumphenyl)-indenyl)dichlorozirconium dichloride

dimethylsilanediylbis(2-methyl-4-(4'-dimethyl-(2"-trimethylsilylethoxymethyl)-ammoniumphenyl)indenyl) dichlorohafnium dichloride

dimethylsilanediylbis(2-methyl-4-(4'-dimethylbenzylammoniumphenyl)indenyl)-dichlorozirconium dichloride

dimethylsilanediylbis(2-methyl-4-(4'-dimethylallylammoniumphenyl)indenyl)-dichlorozirconium diiodide

dimethylsilanediylbis(2-methyl-4-(4'-triethylammoniumphenyl)indenyl)dichlorozirconium diiodide

dimethylsilanediylbis(2-ethyl-4-(4'-dimethyl-(2"-trimethylsilylethoxymethyl)-ammoniumphenyl)indenyl)dichlorohafnium dichloride

dimethylsilanediylbis(2-ethyl-4-(4'-dimethylbenzylammoniumphenyl)indenyl)-dichlorozirconium dichloride

dimethylsilanediylbis(2-ethyl-4-(4'-dimethylallylammoniumphenyl)indenyl)dichlorozirconium diiodide

dimethylsilanediylbis(2-ethyl-4-(4'-trimethylammoniumphenyl)indenyl)dichlorozirconium diiodide

dimethylsilanediylbis(2-n-butyl-4-(4'-trimethylammoniumphenyl)indenyl)dichlorozirconium diiodide

dimethylsilanediylbis(2-isopropyl-4-(4'-triethylammoniumphenyl)indenyl)dichlorozirconium dibromide

dimethylsilanediylbis(2-isobutyl-4-(4'-triethylammoniumphenyl)indenyl)dichlorozirconium ditriflate

dimethylsilanediylbis(2-ethyl-4-(4'-triethylphosphoniumphenyl)indenyl)dichlorozirconium diiodide

dimethylsilanediylbis(2-methyl-4-(4'-dimethylsulfoniumphenyl)indenyl)dichlorozirconium dibromide

dimethylsilanediylbis(2-ethyl-4-(4'-dimethylsulfoniumphenyl)indenyl)dichlorozirconium dibromide

dimethylsilanediylbis(2-methyl-4-(3'-dimethylsulfoniumphenyl)indenyl)dichlorozirconium dibromide

dimethylsilanediylbis(2- methyl-4-(2'-dimethylsulfoniumphenyl)indenyl)dichlorozirconium dibromide

dimethylsilanediylbis(2-methyl-4-(3',5'-bis(dimethylsulfonium)phenyl)indenyl)-dichlorozirconium tetrabromide

dimethylsilanediylbis(2-methyl-4-(4'-dibenzylsulfoniumphenyl)indenyl)dichlorozirconium dibromide

dimethylsilanediylbis(2-methyl-4-(4'-methyl(methoxymethyl)sulfoniumphenyl)-indenyl)dichlorozirconium dichloride

dimethylsilanediylbis(2-methyl-4-(4'-diallylsulfoniumphenyl)indenyl)dichlorozirconium dibromide

dimethylsilanediylbis(2-methyl-4-(3'-diphenylethylphosphoniumphenyl)indenyl)-dichlorozirconium diiodide

dimethylsilanediylbis(2-methyl-4-(3'-trimethylphosphoniumphenyl)indenyl)dichlorozirconium ditriflate

methylphenylsilanediylbis(2-isobutyl-4-(4'-triethylammoniumphenyl)indenyl)-dichlorozirconium ditosylate

1,2-ethanediylbis(2-methyl-4-(3'-dimethylammoniumphenyl)indenyl)dichlorozirconium bistrifluoroacetate

1,2-ethanediylbis(2-methyl-4-(4'-dimethylsulfoniumphenyl)indenyl)dichlorozirconium dibromide

1,2-ethanediylbis(2-methyl-4-(3'-diphenylethylphosphoniumphenyl)indenyl)-dichlorozirconium diiodide

dimethylsilanediylbis(2-methyl-5-trimethylammoniumindenyl)dichlorozirconium dichloride

dimethylsilanediylbis(2-methyl-5-trimethylphosphoniumindenyl)dichlorozirconium dichloride

1,2-ethanediylbis(2-methyl-4-dimethylbenzylammoniumindenyl)dichlorozirconium dibromide

1,2-ethanediylbis(2-methyl-4-phenyl-5-dimethylbenzylammoniumindenyl)-dichlorozirconium dibromide

dimethylsilanediylbis(2-methyl-4-phenyl-6-trimethylammoniumindenyl)dichlorozirconium dichloride

dimethylsilanediylbis(2-methyl-5-dimethylsulfoniumindenyl)dichlorozirconium dibromide

dimethylsilanediylbis(2-methyl-4-(4'-(2"-trimethylammoniumethyl)phenylindenyl)-dichlorozirconium dichloride

dimethylsilanediylbis(2-methyl-4-(4'-(3"-dimethylsulfoniumpropyl)phenylindenyl)-dichlorozirconium diiodide

dimethylsilanediylbis(2-methyl-4-(3'-(2"-trimethylammoniumethyl)phenylindenyl)-dichlorozirconium dichloride

dimethylsilanediylbis(2-methyl-4-(2'-trimethylammoniumethyl)indenyl)dichlorozirconium dichloride

dimethylsilanediylbis(2-(2'-trimethylammoniumethyl)indenyl)dichlorozirconium dichloride

dimethylsilanediylbis(2-(2'-trimethylammoniumethyl)-4-phenylindenyl)dichlorozirconium dibromide

dimethylsilanediylbis(2-(2'-dimethylsulfoniumethyl)-4,6-dimethylindenyl)dichlorozirconium diiodide or a mixture thereof.

**8.** A process for preparing a polyolefin by polymerization of one or more olefins in the presence of a catalyst system as claimed in any of claims 1 to 7.

**9.** The use of a catalyst system as claimed in any of claims 1 to 7 for preparing polyolefins.

## Revendications

**1.** Système de catalyseur contenant

a) au moins un support,
b) au moins un co-catalyseur,
c) au moins un métallocène de formule (I),

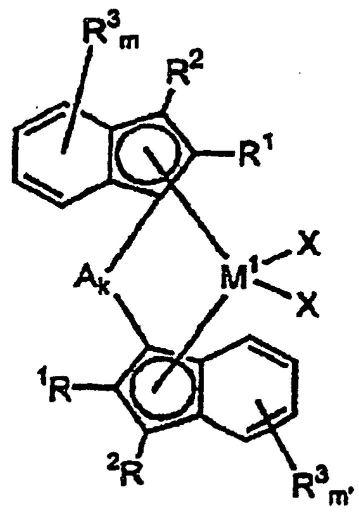

(I)

dans laquelle

$M^1$ représente un atome de métal de transition du groupe 4 de la Classification Périodique des Eléments,
$R^1$ et $R^2$ sont identiques ou différents et représentent un atome d'hydrogène, d'halogène, un groupe carboné en $C_1$ à $C_{20}$,

$R^3$ sont identiques ou différents et représentent un atome d'hydrogène, d'halogène, un groupe carboné en $C_1$ à $C_{40}$, et deux résidus $R^3$ forment éventuellement un système cyclique monocyclique ou polycyclique qui peut être également substitué, dans ce cas, au moins un des résidus $R^1$, $R^2$, $R^3$ porte un groupe cationique $(-DE_L)^+ Y^-$, ou en est un, formule, dans laquelle

D représente un atome du groupe 15 ou 16 de la Classification Périodique des Eléments (CPE),

E sont identiques ou différents et représentent un atome d'hydrogène, un groupe carboné en $C_1$ à $C_{20}$, et deux résidus E forment éventuellement un système cyclique monocyclique ou polycyclique qui peut être également substitué,

L est égal à 3 dans le cas où D représente un atome du groupe 15 de la Classification Périodique des Eléments, et est égal à 2 dans le cas où D représente un atome du groupe 16 de la Classification Périodique des Eléments,

Y représente un atome d'halogène, un groupe sulfonate-alkyle en $C_1$ à $C_{10}$, sulfonate-alkyle en $C_1$ à $C_{10}$ halogéné, sulfonate-aryle en $C_6$ à $C_{20}$, sulfonate-aryle en $C_6$ à $C_{20}$ halogéné, sulfonate-alkyl-aryle en $C_7$ à $C_{20}$, alkyl-carboxyle en $C_1$ à $C_{20}$ halogéné, alkylsulfate en $C_1$ à $C_{10}$, tétrafluoroborate, hexafluorophosphate, hexa-fluoroantimoniate ou hexafluoroarséniate,

m représente un nombre entier, inférieur ou égal à 4 et supérieur ou égal à 1,

m' représente un nombre entier, inférieur ou égal à 4 et supérieur ou égal à 1,

k est égal à zéro ou à 1, dans le cas où k = 0, il s'agit d'un métallocène non ponté, et dans le cas où k = 1, il s'agit d'un métallocène ponté,

A représente un pont de formule

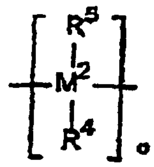
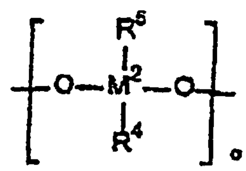
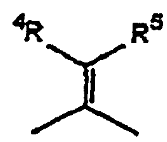

ou $=BR^4$, $AlR^4$, -S-, -SO-, $-SO_2-$, $=NR^4$, $=PR^4$, $=P(O)R^4$, un groupe o-pénylène, 2,2'-biphénylène, formules dans lesquelles

$M^2$ représente un atome de carbone, de silicium, de germanium, d'étain, d'azote ou de phosphore,

o est égal à 1, 2, 3 ou 4,

$R^4$ et $R^5$ sont, indépendamment l'un de l'autre, identiques ou différents et représentent un atome d'hydrogène, d'halogène, un groupe carboné en $C_1$ à $C_{20}$, ou $R^4$ et $R^5$ forment éventuellement un système cyclique monocyclique ou polycyclique, et

les résidus X sont identiques ou différents et représentent un atome d'hydrogène, d'halogène tel qu'un atome de fluor, de chlore, de brome ou de iode, un groupe hydroxyle, alkyle en $C_1$ à $C_{10}$, aryle en $C_6$ à $C_{15}$, alcoxy en $C_1$ à $C_{10}$, aryloxy en $C_6$ à $C_{15}$, ou benzyle.

2. Système de catalyseur selon la revendication 1, **caractérisé en ce que**, dans la formule (I),

$M^1$ représente un atome de titane, de zirconium ou d'hafnium,

$R^1$ et $R^2$ sont identiques ou différents et représentent un atome d'hydrogène, un groupe alkyle en $C_1$ à $C_{20}$, aryle en $C_6$ à $C_{14}$, alcényle en $C_2$ à $C_{20}$, alcynyle en $C_2$ à $C_{20}$, alkylaryle en $C_7$ à $C_{20}$ qui est éventuellement monosubstitué ou polysubstitué par de l'halogène, de manière identique ou différente, ou bien représentent un atome d'halogène, un groupe $-SiMe_3-$, ou $OSiMe_3-$,

$R^3$ sont identiques ou différents et représentent un atome d'hydrogène, un groupe alkyle en $C_1$ à $C_{20}$ qui est éventuellement substitué, aryle en $C_6$ à $C_{14}$ qui est éventuellement substitué, alcényle en $C_2$ à $C_{20}$, alcynyle en $C_2$ à $C_{20}$, alkylaryle en $C_7$ à $C_{20}$, un atome d'halogène, un groupe $SiMe_3-$, $OSiMe_3-$, un groupe hétérocylique en $C_1$ à $C_{20}$ qui est éventuellement substitué, où le terme hétéroatome comprend tous les éléments à l'exception du carbone et de l'hydrogène et représente de préférence les atomes des groupes 14, 15, ou 16 de la Classification Périodique des Eléments, et deux résidus $R^3$ forment éventuellement un système cyclique monocyclique ou polycyclique qui peut être également substitué, dans ce cas, au moins un des résidus $R^1$, $R^2$, $R^3$ porte un groupe cationique $(-DE_L)^+Y^-$, ou en est un,

formule, dans laquelle

D représente un atome d'azote, de phosphore, d'oxygène ou de soufre,

E sont identiques ou différents et représentent un atome d'hydrogène, un groupe alkyle en $C_1$ à $C_{20}$, aryle en $C_6$ à $C_{14}$, alcényle en $C_2$ à $C_{20}$, alcynyle en $C_2$ à $C_{20}$, alkylaryle en $C_7$ à $C_{20}$, trialkylsilyle, triarylsilyle, alkylarylsilyle qui sont éventuellement substitués, et deux résidus E forment éventuellement un système cyclique monocyclique ou polycyclique qui peut être également substitué,
L est égal à 3 dans le cas où D représente un atome du groupe 15 de la Classification Périodique des Eléments, et est égal à 2 dans le cas où D représente un atome du groupe 16 de la Classification Périodique des Eléments,
Y représente un atome de chlore, de brome, de iode, un groupe triflate, mésylate, tosylate, benzène-sulfonate, trifluoro-acétate, méthylsulfate, tétrafluoroborate ou hexafluoro-phosphate,
m est égal à 1 ou à 2,
m' est égal à 1 ou à 2,
k est égal à zéro ou à 1, dans le cas où k = 0, il s'agit d'un métallocène non ponté et dans le cas où k = 1, il s'agit d'un métallocène ponté,
A représente un pont de formule

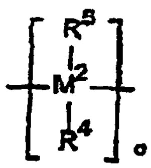

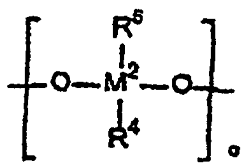

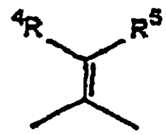

ou $=BR^4$, $AlR^4$, -S-, -SO-, $-SO_2-$, $=NR^4$, $=PR^4$, $=P(O)R^4$, un groupe o-pénylène, 2,2'-biphénylène, formules dans lesquelles
$M^2$ représente un atome de carbone, de silicium ou de germanium,
o est égal à 1 ou à 2,
$R^4$ et $R^5$ sont, indépendamment l'un de l'autre, identiques ou différents et représentent un atome d'hydrogène, d'halogène, un groupe alkyle en $C_1$ à $C_{20}$, aryle en $C_6$ à $C_{14}$, alcoxy en $C_1$ à $C_{10}$, alcényle en $C_2$ à $C_{20}$, arylalkyle en $C_7$ à $C_{20}$, alkylaryle en $C_7$ à $C_{20}$, aryloxy en $C_6$ à $C_{10}$, fluoroalkyle en $C_1$ à $C_{10}$, halogénoaryle en $C_6$ à $C_{10}$, alcynyle en $C_2$ à $C_{10}$, alkylsilyle en $C_3$ à $C_{20}$, arylsilyle en $C_3$ à $C_{20}$ ou alkylarylsilyle en $C_3$ à $C_{20}$, et $R^4$ et $R^5$ forment éventuellement un système cyclique monocyclique ou polycyclique.

3. Système de catalyseur selon la revendication 1, **caractérisé en ce que**, dans la formule (I),

$M^1$ représente un atome de zirconium,
$R^1$ et $R^2$ sont identiques ou différents et représentent un atome d'hydrogène, un groupe méthyle, éthyle, n-propyle, isopropyle, n-butyle, sec-butyle, isobutyle, tert.-butyle, n-pentyle, pentyle ramifié, n-hexyle, hexyle ramifié, cyclohexyle, benzyle,
$R^3$ sont identiques ou différents et représentent un atome d'hydrogène, un groupe méthyle, éthyle, trifluoroéthyle, n-propyle, isopropyle, n-butyle, sec-butyle, isobutyle, tert.-butyle, pentyle, hexyle, octyle, cyclopropyle, cyclopentyle, cyclohexyle, phényle, tolyle, xylyle, tert.-butylphényle, éthylphényle, trifluorométhylphényle, bis (trifluorométhyl)-phényle, méthoxyphényle, fluorophényle, diméthylaminophényle, triméthylammoniumphényiodure, diméthylsulfoniumphénylbromure, triéthylphosphonium-phényl-triflate, naphtyle, acénaphtyle, phénanthrényle, anthracényle, un groupe hétérocylique en $C_1$ à $C_{20}$ qui est éventuellement substitué, où le terme hétéroatome comprend tous les éléments à l'exception du carbone et de l'hydrogène et représente de préférence les atomes des groupes 14, 15, ou 16 de la Classification Périodique des Eléments, et deux résidus $R^3$ forment éventuellement un système cyclique monocyclique ou polycyclique qui peut être également substitué, dans ce cas, au moins un des résidus $R^1$, $R^2$, $R^3$ porte un groupe cationique $(-DE_L)^+ Y^-$, ou en est un, formule, dans laquelle
D représente un atome d'azote, de phosphore ou de soufre,
E sont identiques ou différents et représentent un atome d'hydrogène, un groupe méthyle, éthyle, propyle, butyle, allyle, benzyle, méthoxyméthyle, benzyloxyméthyle, 2-méthoxy-éthoxy-méthyle, 2-triméthylsilyléthoxy-méthyle, triméthyl-silyle,
L est égal à 3 dans le cas où D représente un atome du groupe 15 de la Classification Périodique des Eléments, et égal à 2 dans le cas où D représente un atome du groupe 16 de la Classification Périodique des Eléments,
Y représente un atome de chlore, de brome, de iode, un groupe triflate, mésylate, tosylate, benzènesulfonate, trifluoro-acétate, méthylsulfate, tétrafluoroborate ou hexafluoro-phosphate,

m est égal à 1,
m' est égal à 1,
k est égal à zéro ou à 1, dans le cas où k = 0, il s'agit d'un métallocène non ponté et dans le cas où k = 1, il s'agit d'un métallocène ponté,
A représente un pont de formule

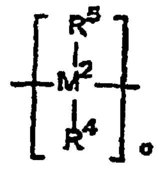

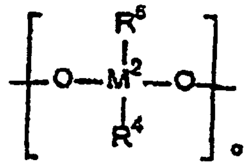

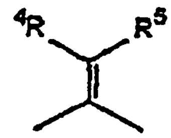

ou $=BR^4$, $AlR^4$, -S-, -SO-, $-SO_2-$, $=NR^4$, $=PR^4$, $=P(O)R^4$, un groupe o-pénylène, 2,2'-biphénylène, formules dans lesquelles
$M^2$ représente un atome de carbone ou de silicium,
o est égal à 1 ou à 2,
$R^4$ et $R^5$ sont, indépendamment l'un de l'autre, identiques ou différents et représentent un atome d'hydrogène, d'halogène, un groupe méthyle, phényle ou naphtyle, triméthylsilyle, triéthylsilyle, tert.-butyldiméthylsilyle, triphénylsilyle, diméthylphénylsilyle, diphénylsilyle ou diphényl-tert.-butylsilyle, et $R^4$ et $R^5$ forment éventuellement un système cyclique monocyclique ou polycyclique.

**4.** Système de catalyseur selon la revendication 1, **caractérisé en ce que**, dans la formule (I), A représente un groupe diméthylsilane-diyle, diméthylgermane-diyle, éthylidène, méthyl-éthylidène, 1,1-diméthyl-éthylidène, 1,2-diméthyl-éthylidène, tétraméthyl-éthylidène, isopropylidène, phénylméthyl-méthylidène ou diphénylméthylidène.

**5.** Système de catalyseur selon la revendication 1, **caractérisé en ce que**, le métallocène possède la formule (I*)

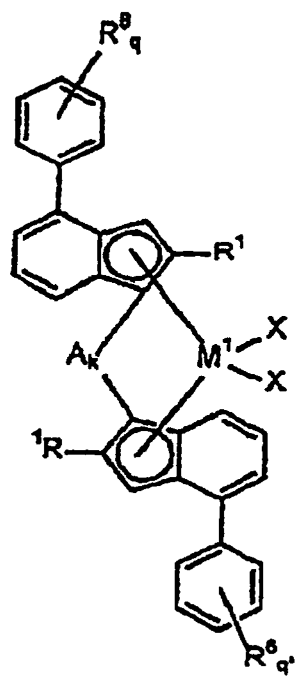

(I*)

dans laquelle

$M^1$, A, $R^1$, k et X prennent les significations énumérées dans la formule (I) et
$R^6$ sont identiques ou différents et représentent un atome d'hydrogène, un groupe alkyle en $C_1$ à $C_{20}$ qui est éventuellement substitué, aryle en $C_6$ à $C_{14}$ qui est éventuellement substitué, alcynyle en $C_2$ à $C_{20}$, alkylaryle en $C_7$ à $C_{20}$, un atome d'halogène, un groupe $OR^4$-, $SiR^4{}_3$-, $NR^4{}_2$-, $SR^4$-, et deux résidus $R^4$ et $R^6$ forment éventuellement, séparément ou conjointement, un système cyclique monocyclique ou polycyclique qui, éventuellement, est également substitué, où $R^4$ prend la signification définie dans la formule (I), et au moins un des résidus $R^1$,
$R^2$, $R^3$ porte un groupe cationique $(-DE_L)^+ Y^-$,
formule dans laquelle D, E, L et Y prennent les significations énumérées dans la formule (I),
q est un nombre entier, inférieur ou égal à 5 et supérieur ou égal à 1,
q' est un nombre entier, inférieur ou égal à 5 et supérieur ou égal à 1.

6. Système de catalyseur selon la revendication 5, **caractérisé en ce que**, dans la formule (I),

$R^6$ sont identiques ou différents et représentent un atome d'hydrogène, un groupe méthyle, éthyle, trifluorométhyle, trifluoroéthyle, n-propyle, isopropyle, n-butyle, sec-butyle, isobutyle, tert.-butyle, pentyle, hexyle, octyle, cyclopropyle, cyclopentyle, cyclohexyle, phényle, et au moins un des résidus $R^6$ porte un groupe cationique $(-DE_L)^+ Y^-$, formule dans laquelle D, E, L et Y prennent les significations énumérées dans la formule (I),
q est égal à 1 ou 2,
q' est égal à 1 ou 2.

7. Système de catalyseur selon la revendication 1, **caractérisé en ce que** la formule (I) représente

- le diiodure de diméthylsilane-diylbis(2-méthyl-4-(4'-triméthylammonium-phényl)-indényl)-dichlorozirconium;
- le diiodure de diméthylsilane-diylbis(2-méthyl-4-(4'-triméthylammonium-phényl)-indényl)-dichlorotitane;
- le diiodure de diméthylsilane-diylbis(2-méthyl-4-(4'-triméthylammonium-phényl)-indényl)-dichlorohafnium;
- le diiodure de diméthylsilane-diylbis(2-méthyl-4-(3'-triméthylammonium-phényl)-indényl)-dichlorozirconium;
- le diiodure de diméthylsilane-diylbis(2-méthyl-4-(2'-triméthylammonium-phényl)-indényl)-dichlorozirconium;
- le tétraiodure de diméthylsilane-diylbis(2-méthyl-4-(3',5'-bis(triméthylammonium)-phényl)-indényl)-dichlorozirconium;
- le diiodure de diméthylsilane-diylbis(2-méthyl-4-(4'-triméthylammonium-naphtyl)-indényl)-dichlorozirconium;
- le ditosylate de diméthylsilane-diylbis(2-méthyl-4-(4'-triméthylammonium-phényl)-indényl)-dichlorozirconium;
- le ditriflate de diméthylsilane-diylbis(2-éthyl-4-(4'-triméthylammonium-phényl)-indényl)-dichlorozirconium;
- le dichlorure de diméthylsilane-diylbis(2-méthyl-4-(4'-triméthylammonium-phényl)-indényl)-dichlorozirconium;
- le bis-tétrafluoroborate de diméthylsilane-diylbis(2-méthyl-4-(4'-triméthylammonium-phényl)-indényl)-dichlorozirconium;
- le diiodure de diméthylsilane-diylbis(2-méthyl-4-(4'-N-méthyl-N-pyrrolidino-phényl)-indényl)-dichlorozirconium;
- le dichlorure de diméthylsilane-diylbis(2-méthyl-4-(4'-diméthylammonium-phényl)-indényl)-dichlorotitane;
- le dichlorure de diméthylsilane-diylbis(2-méthyl-4-(4'-diméthyl(méthoxyméthyl)ammonium-phényl)-indényl)-dichlorozirconium;
- le dichlorure de diméthylsilane-diylbis(2-méthyl-4-(4'-diméthyl-(2''-méthoxy-éthoxy-méthyl)ammonium-phényl)-indényl)-dichlorozirconium;
- le dichlorure de diméthylsilane-diylbis(2-méthyl-4-(4'-diméthyl(benzyloxy-méthyl)ammonium-phényl)-indényl)-dichlorozirconium;
- le dichlorure de diméthylsilane-diylbis(2-méthyl-4-(4'-diméthyl-(2''-triméthylsilyl-éthoxyméthyl)ammonium-phényl)-indényl)-dichlorohafnium;
- le dichlorure de diméthylsilane-diylbis(2-méthyl-4-(4'-diméthylbenzylammonium-phényl)-indényl)-dichlorozirconium;
- le diiodure de diméthylsilane-diylbis(2-méthyl-4-(4'-diméthylallylammonium-phényl)-indényl)-dichlorozirconium;
- le diiodure de diméthylsilane-diylbis(2-méthyl-4-(4'-triéthylammonium-phényl)-indényl)-dichlorozirconium;
- le dichlorure de diméthylsilane-diylbis(2-éthyl-4-(4'-diméthyl-(2''-triméthylsilyl-éthoxy-méthyl)ammonium-phényl)-indényl)-dichlorohafnium;
- le dichlorure de diméthylsilane-diylbis(2-éthyl-4-(4'-diméthylbenzylammonium-phényl)-indényl)-dichlorozirconium;
- le diiodure de diméthylsilane-diylbis(2-éthyl-4-(4'-diméthylallylammonium-phényl)-indényl)-dichlorozirconium;
- le diiodure de diméthylsilane-diylbis(2-éthyl-4-(4'-triméthylammonium-phényl)-indényl)-dichlorozirconium;

- le diiodure de diméthylsilane-diylbis(2-n-butyl-4-(4'-triméthylammonium-phényl)-indényl)-dichlorozirconium;
- le dibromure de diméthylsilane-diylbis(2-isopropyl-4-(4'-triéthylammonium-phényl)-indényl)-dichlorozirconium;
- le ditriflate de diméthylsilane-diylbis(2-isobutyl-4-(4'-triéthylammonium-phényl)-indényl)-dichlorozirconium;
- le diiodure de diméthylsilane-diylbis(2-éthyl-4-(4'-triéthylphosphonium-phényl)-indényl)-dichlorozirconium;
- le dibromure de diméthylsilane-diylbis(2-méthyl-4-(4'-diméthylsulfonium-phényl)-indényl)-dichlorozirconium;
- le dibromure de diméthylsilane-diylbis(2-éthyl-4-(4'-diméthylsulfonium-phényl)-indényl)-dichlorozirconium;
- le dibromure de diméthylsilane-diylbis(2-méthyl-4-(3'-diméthylsulfonium-phényl)-indényl)-dichlorozirconium;
- le dibromure de diméthylsilane-diylbis(2-méthyl-4-(2'-diméthylsulfonium-phényl)-indényl)-dichlorozirconium;
- le tétrabromure de diméthylsilane-diylbis(2-méthyl-4-(3',5'-bis(diméthylsulfonium)-phényl)-indényl)-dichlorozirconium;
- le dibromure de diméthylsilane-diylbis(2-méthyl-4-(4'-dibenzylsulfonium-phényl)-indényl)-dichlorozirconium;
- le dichlorure de diméthylsilane-diylbis(2-méthyl-4-(4'-méthyl(méthoxyméthyl)sulfonium-phényl)-indényl)-dichlorozirconium;
- le dibromure de diméthylsilane-diylbis(2-méthyl-4-(4'-diallylsulfonium-phényl)-indényl)-dichlorozirconium;
- le diiodure de diméthylsilane-diylbis(2-méthyl-4-(3'-diphényléthylphosphonium-phényl)-indényl)-dichlorozirconium;
- le ditriflate de diméthylsilane-diylbis(2-méthyl-4-(3'-triméthylphosphonium-phényl)-indényl)-dichlorozirconium;
- le ditosylate de méthylphénylsilane-diylbis(2-isobutyl-4-(4'-triéthylammonium-phényl)-indényl)-dichlorozirconium;
- le bis-trifluoroacétate de 1,2-éthane-diylbis(2-méthyl-4-(3'-diméthylammonium-phényl)-indényl)-dichlorozirconium;
- le dibromure de 1,2-éthane-diylbis(2-méthyl-4-(4'-diméthylsulfonium-phényl)-indényl)-dichlorozirconium;
- le diiodure de 1,2-éthane-diylbis(2-méthyl-4-(3'-diphényléthylphosphonium-phényl)-indényl)-dichlorozirconium;
- le dichlorure de diméthylsilane-diylbis(2-méthyl-5-triméthylammonium-indényl)-dichlorozirconium;
- le dichlorure de diméthylsilane-diylbis(2-méthyl-5-triméthylphosphonium-indényl)-dichlorozirconium;
- le dibromure de 1,2-éthane-diylbis(2-méthyl-4-diméthylbenzylammonium-indényl)-dichlorozirconium;
- le dibromure de 1,2-éthane-diylbis(2-méthyl-4-phényl-5-diméthylbenzylammonium-indényl)-dichlorozirconium;
- le dichlorure de diméthylsilane-diylbis(2-méthyl-4-phényl-6-triméthylammonium-indényl)-dichlorozirconium;
- le dibromure de diméthylsilane-diylbis(2-méthyl-5-diméthylsulfonium-indényl)-dichlorozirconium;
- le dichlorure de diméthylsilane-diylbis(2-méthyl-4-(4'-(2''-triméthylammonium-éthyl)-phényl-indényl)-dichlorozirconium;
- le diiodure de diméthylsilane-diylbis(2-méthyl-4-(4'-(3''-diméthylsulfonium-propyl)-phényl-indényl)-dichlorozirconium;
- le dichlorure de diméthylsilane-diylbis(2-méthyl-4-(3'-(2''-triméthylammonium-éthyl)-phényl-indényl)-dichlorozirconium;
- le dichlorure de diméthylsilane-diylbis(2-méthyl-4-(2'-triméthylammonium-éthyl)-indényl)-dichlorozirconium;
- le dichlorure de diméthylsilane-diylbis(2-(2'-triméthylammonium-éthyl)-indényl)-dichlorozirconium;
- le dibromure de diméthylsilane-diylbis(2-(2'-triméthylammonium-éthyl)-4-phényl-indényl)-dichlorozirconium;
- le diiodure de diméthylsilane-diylbis(2-(2'-diméthylsulfonium-éthyl)-4,6-diméthyl-indényl)-dichlorozirconium ou leurs mélanges.

**8.** Procédé de préparation d'une polyoléfine par polymérisation d'une ou plusieurs oléfines en présence d'un système de catalyseur selon une quelconque des revendications 1 à 7.

**9.** Mise en oeuvre d'un système de catalyseur selon une quelconque des revendications 1 à 7 pour la préparation de polyoléfines.